# EUROPÄISCHE PATENTSCHRIFT

(11) **EP 2 394 090 B1**
(45) Veröffentlichungstag und Bekanntmachung des Hinweises auf die Patenterteilung: **26.12.2012**
(21) Anmeldenummer: 10701886.3
(22) Anmeldetag: 03.02.2010
(51) Int. Cl.: F16L 59/135, F16L 59/12

(54) **KÄLTEISOLIERTES ROHRLAGER UND MONTAGE**
COLD-INSULATED PIPE SUPPORT AND INSTALLATION
PORTE-TUYAU ISOLE CONTRE LE FROID ET MONTAGE

(30) Priorität: 09.02.2009 DE 102009008140
(43) Veröffentlichungstag der Anmeldung: 14.12.2011
(73) Patentinhaber: Lisega Aktiengesellschaft, 27404 Zeven (DE)
(72) Erfinder: SENKPIEL, Florian, 27404 Zeven (DE)
(74) Vertreter: Lippert, Stachow & Partner
(86) Internationale Anmeldenummer: PCT/EP2010/051317
(87) Internationale Veröffentlichungsnummer: WO 2010/089328

(56) Entgegenhaltungen:
- DE-A1-102005 013 728
- DE-U1- 8 615 502

## Beschreibung

Die Erfindung betrifft ein kälteisoliertes Rohrlager für eine Rohrleitung, insbesondere für eine Tieftemperaturrohrleitung, mit einer einen Aufnahmeraum für einen Rohrabschnitt der Rohrleitung begrenzenden Rohraufnahme, die eine Außenschale und ein zwischen Außenschale und Aufnahmeraum angeordnetes Isoliersystem mit einer Wärmedämmung aus festem Isolationswerkstoff aufweist, und mit einer Haltevorrichtung zur Aufnahme und Weitergabe von auf die Rohrleitung und auf eine Basis wirkenden Kräften und Kraftmomenten, wobei die Haltevorrichtung eine Anschlagseinrichtung mit mindestens einem Anschlagelement zur Aufnahme und Weitergabe axialer Rohrkräfte an die Rohraufnahme und/oder an die Basis aufweist, das Anschlagelement in Einbaulage an einer schmalflächigen, sich in Einbaulage in axialer Richtung längs erstreckenden und als Verbindungsseitenfläche ausgebildeten Seitenfläche außenseitig an der Rohrleitung festgelegt ist und das mindestens eine Anschlagelement in Einbaulage über eine vorgesehene Krafteinleitungshilfe axial kraftwirksam an der Rohraufnahme angreift. Die Erfindung betrifft ferner eine Montage des Rohrlagers über der Rohrleitung.

Derartige Rohrlager finden insbesondere im Bereich der Tieftemperaturleitung ihre Anwendung. Ein Problem ist hier die Fixierung des Rohrlagers in einer bestimmten Position auf der Rohrleitung und in relativer Lage zur Basis.

In der DE 86 15 502 U1 sind plattenförmige Anschlagelemente vorgesehen, die, über eine ringförmige Krafteinleitungshilfe miteinander verbunden, axial kraftwirksam an der Rohraufnahme angreifen, wobei die Anschlagelemente mit der Rohrleitung und der Krafteinleitungshilfe verschweißt sind. Eine Lösung beschreibt die DE 10 2005 013 728 A1, indem hier eine relativ aufwendige radial innere Aufnahme für die Wärmedämmung vorgesehen ist, die auf der Rohrleitung verschweißt wird. Die innere Aufnahme ist zum radialen Überbringen über die Rohrleitung bei der Montage axial hälftig geteilt. In der US 4,804,158 wird vorgeschlagen, Ringssektore umfänglich außenseitig auf dem Rohrabschnitt und umfänglich innenseitig auf der Außenschale so aufzuschweißen, dass die Rohraufnahme axial gehalten werden kann. In der DE 10 2005 013 728 ist eine Längsteilungsebene für das Rohrlager vorgesehen, mittels derer das Rohrlager zur Montage seitlich über die Rohrleitung bringbar ist. Nachteilig bei allen Maßnahmen sind hohe mechanische Belastungen der Rohrleitung bei thermisch bedingten Dehnungen und/oder Schrumpfungen der Rohrleitung.

Der Erfindung liegt daher die Aufgabe zugrunde, eine Rohrleitung der eingangs genannten Art bereitzustellen, die unaufwendig aufgebaut ist und die die Rohrleitung im Betrieb mechanisch geringer belastet.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere dadurch gelöst, dass die Krafteinleitungshilfe lose bleibend an dem mindestens einen Anschlagelement anliegt.

Es kann die Krafteinleitungshilfe kraft- und/oder formschlüssig, insbesondere stoffschlüssig, mit der Rohraufnahme und/oder der Basis verbunden sein. Hierdurch kann sich das mindestens eine Anschlagelement bei thermisch bedingter Aufweitung oder Kontraktion der Rohrleitung in radialer Richtung relativ zur Krafteinleitungshilfe verschieben. Eventuell können bei der radialen Relativbewegung zwischen Krafteinleitungshilfe und Anschlagelement dieser Relativbewegung entgegenstehende Reibungskräfte auftreten. Diese können, wie weiter unten gezeigt, beispielsweise durch vorgesehenes Spiel zwischen Rohraufnahme und Basis und/oder durch eine bestimmte radiale Beabstandung der Krafteinleitungshilfe zum Aufnahmeraum der Rohraufnahme bzw., in Einbaulage, zur Rohrleitung minimiert werden.

Das Anschlagelement kann von außen mittelbar oder, wie weiter unten gezeigt, unmittelbar an die Rohraufnahme angrenzen bzw. anschlagen. Das Anschlagelement kann somit im Sinne eines Anschlages zumindest bezüglich der axialen Richtung formschlüssig oder lose bleibend an der Rohraufnahme angrenzen. Es kann somit von außen unmittelbar an der Rohraufnahme anschlagen. Hierzu kann das Anschlagelement zur Montage gegen die über die Rohrleitung montierte Rohraufnahme geführt werden, von außen an der Rohraufnahme anschlagen und an der Rohrleitung festgelegt werden. Dadurch kann der Anschlag angepasst an die tatsächliche Lage der auf der Rohrleitung montierten Rohraufnahme an der Rohraufnahme anliegen. Es wird vorgeschlagen, das Anschlagelement an seiner schmalen Verbindungsseitenfläche so an dem Rohr festzulegen, dass die Verbindungsseitenfläche sich mit ihrer größeren Längsseite in axialer Richtung der Rohrleitung und mit ihrer klein ausgelegten Schmalseite umfänglich auf der Rohrleitung erstreckt. Das Anschlagelement ist damit bezüglich seiner umfänglichen Ausdehnung lediglich in Richtung der Schmalseite auf der Rohrleitung festgelegt. Dank dieser Ausrichtung des Anschlagelementes auf der Rohrleitung kann die Belastung der Rohrleitung durch das Anschlagelement bezüglich einer möglichen Umfangsänderung in Form von Dehnung und Schrumpfung infolge von Temperaturänderungen, welche insbesondere bei Tieftemperaturrohrleitungen infolge eines hohen Temperaturgradienten zur Umgebung hin auftreten können, minimiert werden. Bezüglich einer mechanischen Belastung des Anschlagelementes in axialer Richtung kann ferner, dank der Ausrichtung der schmalen Verbindungsseitenfläche des Anschlagelementes auf der Rohrleitung, das mechanische Widerstandmoment als Maß für die Festigkeit vorteilhaft entsprechend hoch ausfallen, so dass eine notwendige umfängliche Erstreckung des Anschlagelementes und damit die Belastung der Rohrleitung infolge der oben genannten thermisch bedingten Umfangsänderungen entsprechend minimiert werden kann. Das Anschlagelement kann zur Übertragung axialer Rohrkräfte auch oder zusätzlich an der Basis angrenzen bzw. anschlagen. Insbesondere bei einer Tieftemperaturrohrleitung kommt diese Möglichkeit aber wegen der dadurch entstehenden Kältebrücke zwischen Basis und Rohrleitung weniger in Betracht.

Das Anschlagelement kann axial verschiebungsfest an der Rohrleitung festgelegt sein. Hierzu kann das Anschlagelement mit der Rohrleitung verklebt oder hartgelötet sein. Bevorzugt ist das Anschlagelement jedoch mit der Rohrleitung verschweißt.

Es wird ein besonderer Vorteil darin gesehen, dass bezüglich der axialen Richtung an beiden Seiten der Rohraufnahme jeweils mindestens ein Anschlagelement vorgesehen ist. Somit kann die Rohraufnahme axial verschiebungsfest auf der Rohrleitung festgelegt werden. Es können axiale Rohrkräfte in beiden Richtungen auf die Rohraufnahme übertragen werden. Hierdurch kann das Rohrlager mittels der Anschlagelemente in situ bzw. vor Ort in exakter Anpassung an die sich jeweils im Einbau des Rohrlagers ergebenden, tatsächlichen Positionierung derselben auf der Rohrleitung festgelegt oder fixiert werden. Die Rohraufnahme kann somit an einer vorgegebenen Stelle über die Rohrleitung gebracht werden, eventuell mittels eines korrigierendes Verschieben auf der Rohrleitung exakt positioniert werden und dann mittels der Anschlagelemente in einer dann korrekten Einbauposition axial fixiert werden. Somit kann das Rohrlager auch bei Montageabweichungen, d.h. bei Abweichungen der geplanten Position des Rohrlagers auf der Rohrleitung von einer dann tatsächlichen Position, korrekt montiert werden. Es können somit zum Beispiel zusätzliche mechanische Spannungen vermieden werden, die dadurch verursacht werden können, dass das Rohrlager bei Montageabweichungen zum Beispiel zu der in der Planung vorgesehenen Position hin auf der Rohrleitung "hingebogen" und somit mit der Rohrleitung ungünstig verspannt wird.

Das Anschlagelement bzw. die Anschlagelemente können unmittelbar mit einer Seitenfläche oder mittelbar über Krafteinleitungshilfen oder dergleichen zur Verminderung eines durch die übertragenen Rohrkräfte erzeugten Druckes auf die Rohraufnahme kraft- und/oder formschlüssig an der Rohraufnahme anliegen. Zur unmittelbaren Übertragung axialer Rohrkräfte auf die Rohraufnahme kann das Anschlagelement beispielsweise keilartig mit abgeflachter Keilspitze als Verbindungsseitenfläche und mit einer trapezartigen Stirnfläche ausgebildet sein, mittels derer das Anschlagelement in Einbaulage axial an der Rohraufnahme anliegen kann. Somit kann die trapezartige Stirnfläche wesentlich größer als die abgeflachte Keilspitze sein, so dass der infolge der Krafteinleitung auf die Rohraufnahme ausgeübte Druck entsprechend gering ausfallen kann. Das Anschlagelement bzw. die Anschlagelemente können lose bleibend axial mittelbar oder unmittelbar an der Rohraufnahme und/oder der Basis angreifen. Infolge der Kraftübertragung können Reibungskräfte auftreten, die eine Übertragung umfänglich wirkender Kräfte ermöglichen.

In einer bevorzugten Ausführungsform des Rohrlagers ist das Anschlagelement plattenförmig mit großen Seitenflächen und diese verbindenden Schmalseitenflächen ausgebildet, wobei eine Schmalseitenfläche die Verbindungsseitenfläche zur Festlegung des Anschlagelementes an der Rohrleitung bilden kann. Ferner kann das Anschlagelement in Einbaulage über eine Krafteinleitungshilfe axial an der Rohraufnahme angreifen. Hierzu kann das Anschlagelement mit einer als Anschlagseitenfläche ausgebildeten Schmalseitenfläche an der Krafteinleitungshilfe angreifen. Die Krafteinleitungshilfe kann beispielsweise als endstirnseitig des Anschlagelementes angeordnetes und vorzugsweise zumindest teilumfänglich verlaufendes, vorzugsweise plattenförmiges Bauteil mit großen Seitenflächen und Schmalseitenflächen ausgebildet sein. Das plattenförmige Bauteil kann in Einbaulage umfänglich angeordnet und vorzugsweise mittig zu dem Anschlagelement an einer seiner großen Seitenflächen an dem Anschlagelement festgelegt sein. Das plattenförmige Bauteil kann mittels seiner in Einbaulage in Querschnittsebene verlaufenden, der Rohraufnahme zugewandten anderen großen Seitenfläche axial seitlich an der Rohraufnahme angreifen. Mittels der Krafteinleitungshilfe können somit Rohrkräfte über eine größere Seitenfläche als die Schmalseitenfläche des Anschlagelementes und somit unter geringerer Druckbelastung für die Rohraufnahme seitlich in dieselbe eingeleitet werden.

Die Krafteinleitungshilfe kann beispielsweise mit mindestens einem Anschlagelement kraft- und/oder formschlüssigverbunden sein. Hierbei kann die Krafteinleitungshilfe lose bleibend an der Rohraufnahme und/oder der Basis angreifen. Bevorzugt liegt die Krafteinleitungshilfe jedoch lose bleibend an dem mindestens einem Anschlagelement an.

Die Krafteinleitungshilfe kann als in Einbaulage zumindest teilumfänglich angeordnetes Ringelement, insbesondere als Ringssegment, mit einer in Einbaulage in Querschnittsebene verlaufenden, der Rohraufnahme zugewandten und axial seitlich an der Rohraufnahme angreifenden Seitenfläche ausgebildet sein. Das Ringelement kann an der Anschlagseitenfläche des zugeordneten Anschlagelementes an demselben festgelegt sein. Insbesondere kann die Krafteinleitungshilfe als Kreisringscheibe, insbesondere als Kreisringssegment, mit einem Innenradius ausgebildet sein. Die Kreisringscheibe kann somit eine in Einbaulage dem Anschlagelement zugewandte erste Kreisringseitenfläche und eine der Rohraufnahme zugewandte und axial seitlich an der Rohraufnahme angreifende zweite Kreisringseitenfläche aufweisen. Es kann jedem Anschlagelement ein Ringsegment bzw. ein Kreisringsegment zugeordnet sein.

Vorzugsweise ist die Krafteinleitungshilfe radial beabstandet zur Rohrleitung angeordnet. Hierdurch kann ein unmittelbarer Wärmeübergang mittels Wärmeleitung von der Krafteinleitungshilfe in die Rohrleitung verhindert werden. Somit kann in Einbaulage lediglich das Anschlageselement mit seiner Schmalseitenfläche Wärme an die Rohrleitung infolge Wärmeleitung übertragend wirken. Kräftemechanisch günstig kann der radiale Abstand der Krafteinleitungshilfe zur Rohrleitung etwa 0,5mm bis 5mm betragen. Vorzugsweise ist der Abstand, d.h. der durch die Beabstandung von Krafteinleitungshilfe zur Rohrleitung entstehende Zwischenraum mit Isolierung gefüllt sein. Diese Isolierung kann die radiale Lage der Krafteinleitungshilfe stabilisieren.

In einer bevorzugten Weiterbildung des Rohrlagers ist das Ringelement bzw. die Kreisringscheibe radial und axial zur Lageraufnahme hin form- und/oder kraftschlüssig an der Wärmedämmung festlegbar. Vorzugsweise liegt das Ringelement in Einbaulage zumindest bezüglich der axialen Richtung lose bleibend an der Wärmedämmung an. Es können mindestens zwei in Einbaulage über den Umfang der Rohrleitung vorzugsweise gleich beabstandete Anschlagelemente stirnseitig und bezüglich des Ringelementes vorzugsweise lose bleibend an demselben angreifen. Somit kann das Ringelement eine thermisch bedingte Dehnung oder Schrumpfung des Rohrabschnittes nicht behindern und entsprechend keine zusätzlichen Spannungen in der Rohrleitung erzeugen. Ferner kann hierdurch ein Wärmeübergang von der Krafteinleitungshilfe oder dem Ringelement auf das bzw. die Anschlagelemente vorteilhaft erschwert werden. Infolge der zwischen Anschlagelemente und Ringelement auftretenden Reibungsverhältnisse bei umfänglich wirkender Belastung können bestimmte umfängliche Kräfte zwischen Anschlagelemente und Ringelement übertragen werden.

Die Anschlagelemente sind umfänglich vorzugsweise gleich von einander beabstandet über den Umfang angeordnet. Es können also zwei Anschlagelemente in einem Mittelpunktswinkel von 180°, drei Anschlagelemente in einem Mittelpunktswinkel von 120° und, welches bevorzugt wird, vier Anschlagelementen in einem Mittelpunktswinkel von 90° beabstandet voneinander angeordnet sein.

Vorzugsweise ist das Ringelement aus mindestens zwei Ringsektoren, insbesondere Kreisringsektoren, aufgebaut. Diese sind zum Einbau des Rohrlagers über die Rohrleitung radial von außen über die Rohrleitung bringbar und vorzugsweise stoffschlüssig zu einem vollumfänglichen Ring bzw. vollumfänglichen Kreisring miteinander verbindbar. Vorzugsweise sind die Ringsektoren bzw. Kreisringsektoren in Einbaulage über der Rohrleitung miteinander verschweißt. Zweckmäßig kann zum Verschweißen eine entsprechende Nahtvorbereitung in Form von Abfasungen an in Umfangsrichtung weisenden Stirnseiten der Ringsektoren bzw. Kreisringsektoren vorgesehen sein, die die Ausbildung einer V-Schweißnaht oder einer Doppel-V-Schweißnaht ermöglichen. Nach erfolgter Schweißung kann in üblicher Weise ein Überstand der Schweißnaht über die Seitenflächen des dann vollständigen Ringelementes bzw. Kreisringes abgearbeitet, bevorzugt bis auf die Oberfläche abgeschliffen werden. Dies erfolgt zweckmäßig vor seitlicher Anlage des Ringelementes bzw. Kreisringes an der Rohraufnahme.

Vorzugsweise weist das Isoliersystem weiteres Isolationsmaterial auf, das in einem Zwischenraum zwischen der Rohrleitung und der von der Rohrleitung radial beabstandeten Krafteinleitungshilfe angeordnet ist. Vorzugsweise ist das Isoliersystem mit weiteren Komponenten, wie eine kryogenischen Dampfsperre vorzugsweise aus Elastomermastix zumindest an den in Einbaulage nach außen weisenden Oberflächen der Wärmedämmung zur Versiegelung derselben sein. Die nach außen weisende Oberfläche der Wärmedämmung kann mit einer laminierten Aluminium/PolyesterFolie versiegelt sein. Hierzu kann die Aluminium/PolyesterFolie bevorzugt mit der Oberfläche verklebt sein. Bevorzugt sind zumindest die nach außen weisenden Oberflächen der Wärmedämmung feuerhemmend ausgelegt.

Die Haltevorrichtung kann mindestens eine Tragkonstruktion zur Abstützung und/oder Aufhängung des Rohrlagers an der Basis aufweisen. Dank der Tragkonstruktion kann das Rohrlager innerhalb eines ersten Verschiebungsbereiches in einer axialen ersten Verschiebungsrichtung, innerhalb eines zweiten Verschiebungsbereiches in einer zur ersten Verschiebungsrichtung senkrechten tangentialen zweiten Verschiebungsrichtung und/oder innerhalb eines dritten Verschiebungsbereiches in einer zur ersten und zweiten Verschiebungsrichtung senkrechten radialen dritten Verschiebungsrichtung gleitverschieblich und/oder rollverschieblich an der Basis angelagert sein. Dank der verschieblichen Lagerung des Rohrlagers kann sich die Rohrleitung unter thermischer Einwirkung ungehinderter dehnen oder zusammenziehen, so dass sie geringer belastet wird, wobei jedoch eine Stützwirkung des Rohrlagers erhalten bleibt. Vorteilhaft kann zumindest einer der Verschiebungsbereiche endseitig mittels Anschlägen begrenzt sein.

Das Rohrlager kann somit zum Beispiel über Rollen, Kugeln und dergleichen rollverschieblich und/oder vorzugsweise über eine als erste Gleitfläche ausgebildete Fläche gleitverschieblich an der Basis angelagert sein. Somit kann das Rohrlager mittels der Haltevorrichtung in einem Lager mit mindestens einem Freiheitsgrad abgestützt bzw. aufgehängt werden. Das Rohrlager kann beispielsweise relativ zur Basis in axialer Richtung bewegt werden, um zum Beispiel einer Längenänderung der in die Rohraufnahme eingelegten Rohrleitung nachzugeben. Bei zum Beispiel einem gekrümmten Rohrleitungsverlauf kann eine Längenänderung der Rohrleitung in einer Ebene auftreten, so dass hier das Rohrlager bevorzugt parallel zu dieser Ebene bewegbar und somit mit zwei Freiheitsgraden versehen gelagert sein kann. Erfolgt die Bewegung des Rohrlagers relativ zur Basis als Rollbewegung, so kann die Haltevorrichtung zum Beispiel einen vorzugsweise zweiachsigen Rollwagen mit Rollkörpern aufweisen. Die Rollkörper können bei einer Linearbewegung als Walzen und bei einer Bewegung in der Fläche als frei drehbare Kugeln ausgelegt sein.

Die Tragkonstruktion kann ein Fußelement aufweisen, das vorzugsweise fest mit der Rohraufnahme und hier vorzugsweise außenseitig mit der Außenschale verbunden ist. Das Fußelement kann sich radial von der Rohraufnahme erstrecken. Es kann die radial außen liegende erste Gleitfläche zur gleitverschieblichen Anlagerung an der Basis aufweisen, wobei an der Basis als Auflager eine zweite Gleitfläche vorgesehen sein kann, an der der Fuß mit seiner ersten Gleitfläche abgleiten kann. In Einbaulage können somit das Fußelement und damit das Rohrlager mit der ersten Gleitfläche gleitverschieblich in dem ersten Verschiebungsbereich und/oder dem zweiten Verschiebungsbereich an der Basis angelagert sein. Zumindest eine der Gleitflächen kann besonders gleitfähig ausgebildet sein. Hierzu kann beispielsweise ein Reibung mindernde Beschichtung insbesondere aus Polytetrafluorethylen (PTFE) vorgesehen sein. Vorzugsweise weist die zweite Gleitfläche zumindest ein PTFE-Pad auf, das formschlüssig in eine Vertiefung in der zweiten Gleitfläche festgesetzt sein kann. Vorzugsweise ist das PTFE-Pad in die Gleitfläche eingeklebt. In bevorzugter Werkstoffpaarung zur PTFE-Beschichtung der einen Gleitfläche ist eine vorzugsweise plattenartige Belegung der anderen Gleitfläche mit einem nichtrostenden Edelstahl vorgesehen.

Die Anschläge können zweckmäßig als Winkelprofil mit einer in Einbaulage senkrecht zur jeweils zugeordneten Verschiebungsrichtung angeordneten, als Anschlagfläche ausgebildeten Seitenfläche ausgebildet sind. Die Winkelprofile können jeweils an der Basis festlegbar sein. Vorzugsweise ist zumindest einer der Verschiebungsbereiche einstellbar. Hierzu können die Anschläge in einer Linearführung in jeweils zugeordneter Verschiebungsrichtung über einen Verschiebungsweg verschieblich angeordnet sein und in bestimmter Position über den Verschiebungsweg in der Führung bzw. an der Basis festlegbar sein. Somit kann über eine Verstellung der Position eines Anschlages in zugeordneter Verschiebungsrichtung der jeweils zugeordnete Verschiebungsbereich eingestellt bzw. geändert werden. Die Linearführung kann zum Beispiel zwei von einander parallel beabstandete und in zugeordneter Verschiebungsrichtung verlaufende Langlöcher aufweisen, in denen der jeweilige Anschlag mittels vorgesehener Schraubbolzen führbar und festlegbar ist.

Die Wärmedämmung kann in Einbaulage auf der Rohrleitung bzw. dem Rohrabschnitt festgelegt sein. Vorzugsweise ist die Wärmedämmung mit der Rohrleitung verklebt. Zur Verklebung kann ein Zwei- oder Mehr-Komponenten-Kleber eingesetzt werden. Damit in Einbaulage keine unerwünschte Relativbewegung zwischen Rohraufnahme und dem Rohrabschnitt in der Rohraufnahme auftreten kann, ist es wesentlich, dass die auftretenden Reibungskräfte bei der Bewegung, d.h. im wesentlichen die Haftreibung sowie die Gleitreibung und/oder Rollreibung in der Lagerung der Fußes geringer als die Reibungs- und/oder Haftungskräfte zwischen Wärmedämmung und Rohrabschnitt sind. Daher können die zusammenwirkenden Gleitflächen von Tragkonstruktion und Basis mit Reibung mindernden Maßnahmen, wie glatte Oberfläche, Schmierung oder Beschichtung mit reibungsarmen Schichtwerkstoff, versehen sein.

Zur ihrer leichteren Montage können Außenschale und Wärmedämmung jeweils mindestens eine Formteilung mit einer Teilung senkrecht zur Querschnittsebene der Rohraufnahme aufweisen. Mittels der Formteilung können somit Außenschale und Wärmedämmung in Formteile zerfallen, die zur Montage des Rohrlagers auf der Rohrleitung in einer radialen Montagerichtung über die Rohrleitung bringbar sind und wieder zusammenfügbar sind. Hierbei ist die Formteilung zweckmäßig so ausgebildet, dass die Formteile bezüglich einer radialen Richtung oder senkrecht zur Längsachse keine Hinterschneidungen auftreten, so dass die Formteile problemlos auseinander bzw. übereinander bringbar sind. Insbesondere die Außenschale kann so dimensioniert sein, dass die Formteile in Form von Halbschalen in ihrer zusammengefügten Position über einen Spalt beabstandet sind und dass der Spalt mittels vorzugsweise Schraubverbindungen zur Verbindung der Halbschalen in umfänglicher Richtung überbrückt werden kann. Hierdurch kann die Verbindung der Halbschalen unter Vorspannung erfolgen. Mittels der Vorspannung können die Formteile der Wärmedämmung aneinander und gegen den Rohrabschnitt gepresst werden. Vorzugsweise grenzen die Formteile der Wärmedämmung, die bei einer Zweiteilung der Wärmedämmung ebenfalls als Halbschalen ausgebildet sein können, in ihrer zusammengefügten Position über einen vorzugsweise schmalen Spalt aneinander. Dieser Spalt kann mit zusätzlichem, vorzugsweise elastisch verformbarem Isolationsmaterial gefüllt sein. Die Teilung der Wärmedämmung kann bezüglich der radialen Erstreckung stufenförmig ausgebildet sein. Diese an sich bekannte Maßnahme dient vornehmlich dazu, einen rein radialen Spalt zwischen den Formteilen der Wärmedämmung in Einbaulage auf der Rohrleitung zu vermeiden. Bezüglich der möglichen Teilung der Rohraufnahme, d. h. hier der Wärmedämmung und der Außenschale, sowie der radialen Montage derselben wird im Übrigen auf die DE 10 2005 013 728 A1 verwiesen, deren Offenbarungsgehalt bezüglich der Formteilung und der radialen Montage der Rohraufnahme sowie bezüglich der zusätzlichen Wärmedämmungsmaßnahmen mit in diese Anmeldung aufgenommen wird, da diese Maßnahmen auch vorteilhaft bei dem Anmeldungsgegenstand angewandt werden können.

Die Haltevorrichtung kann ferner Spannelemente zum Zusammenhalt und zur Verspannung der Formteile von Außenschale und/oder Wärmedämmung in Einbaulage und Anpressen derselben auf der Rohrleitung aufweisen. Die Haltevorrichtung kann beispielsweise umfängliche Bänder aufweisen, die über die Außenseite der Außenschale gelegt und gespannt werden. Bevorzugt weist die Haltevorrichtung jedoch eine Schraubverbindung auf, die die Formteile der Außenschale und damit der mit der Außenschale form- und kraftschlüssig verbundene Wärmedämmung bzw. Isoliersystem in umfänglicher Richtung miteinander verbindet und vorzugsweise mittels einer Vorspannvorrichtung zusätzlich verspannt. Die Vorspannvorrichtung kann in der Schraubverbindung Federelemente aufweisen. Hierdurch kann realisiert werden, dass bei Dimensionsänderung, insbesondere infolge von Temperaturveränderungen, die Veränderung der Vorspannung minimiert wird.

Letztere Maßnahme ermöglicht einen festeren, d.h. verschiebungsfesteren und verdrehfesteren Sitz der Rohrleitung bzw. des Rohrabschnittes in der Lageraufnahme. Die Schraubverbindung kann Zapfen aufweisen, die so an der Außenseite und nahe der Teilungsebene der Außenschale befestigt sind sowie sich bevorzugt senkrecht zur Richtung der zu erwartenden maximalen Kraft und damit hier etwa parallel zur Teilungsebene radial so nach außen hin erstrecken, dass sie sich paarweise gegenüberstehen. Die Zapfen können eine Schraubenöffnung in umfänglicher Richtung aufweisen, durch die Schrauben oder Schraubbolzen zur Verbindung der jeweils paarweise gegenüberstehenden Zapfen geführt und verschraubt sind. Hierbei können eine zusätzliche Kontermutter und/oder eine Sicherungsscheibe zur Sicherung der Schraubverbindung vorgesehen sein. Die Schraubverbindung kann zusätzlich über die Federeinrichtung vorgespannt sein.

Die Federeinrichtung kann Tellerfedern aufweisen, die bevorzugt zwischen Schraubenkopf und der zum Schraubenkopf benachbarten Seitenfläche des Zapfens angeordnet sind. Hierdurch kann zudem gewährleistet werden, dass die Schraubverbindung die Formteile mit etwa gleich bleibenden Zugkräften zusammenhält und somit dieselben unter etwa gleich bleibender Anpresskraft gegen den Rohrabschnitt anpresst. Die Tellerfedern können bekanntermaßen zueinander fluchtend sowie in wechselnder Anordnungsfolge und somit "in Reihe geschaltet" und/oder in gleicher Anordnungsfolge und somit "parallel geschaltet" auf dem Schraubbolzen angeordnet sein. Bekanntermaßen kann die wechselnde Anordnungsfolge eine Erhöhung eines Federweges und die gleiche Anordnungsfolge eine Erhöhung einer Federkraft der Federeinrichtung bewirken. Indem die Schraubenöffnungen und der Innendurchmesser der Tellerfedern etwas größer als der Außendurchmesser der zugehörigen Schraube ausgelegt sind, können sich die Tellerfedern, wenn sie fest angezogen werden, dank ihrer konischen Form in die Durchgangsöffnungen hinein zentrieren. Anstatt oder zusätzlich zu Tellerfedern kann vorgesehen sein, dass eine den Spalt überspannende Zugfeder die Halbschalen der Formteile zusammenspannt, wobei die Zugfeder ebenfalls von Zapfen gleich denen der o.a. Schraubenverbindung gehalten werden kann.

Vorzugsweise sind Außenschale und/oder Wärmedämmung bezüglich einer mittigen ersten Spiegelsymmetrieebene in Längsschnittebene und/oder einer mittigen zweiten Spiegelsymmetrieebene vorzugsweise in Querschnittsebene spiegelsymmetrisch aufgebaut. Ferner kann die axiale Erstreckung der Außenschale geringer als die der Wärmedämmung sein.

Zum leichteren Positionieren von Außenschale und Wärmedämmung bei der Montage bezüglich ihrer relativen axialen Lage kann eine zumindest teilumfängliche Ringscheibe, insbesondere mindestens ein Innenringsektor, vorgesehen sein, die bzw. das beabstandet zu axialen Endbereichen der Außenschale und innenseitig an der Außenschale festgelegt ist und sich in Einbaulage radial nach Innen form und/oder kraftschlüssig in die Wärmedämmung hinein erstreckt. Diese Ringscheibe bzw. der Innenringsektor kann in Form von Ringhalbschalen innenseitig der Außenschalen an denselben festgelegt sein.

Dank ihres erfindungsgemäßen Aufbaues kann die Montage des Rohrlagers erheblich vereinfacht werden und unter Vermeidung zusätzlicher auf die Rohrleitung wirkender Spannungen auf derselben montiert werden. Hierzu kann das Rohrlager gemäß einer der zuvor beschriebenen Ausführungsformen ausgebildet sein und insbesondere die Merkmale aufweisen, sie eine einen Aufnahmeraum für einen Rohrabschnitt der lagerbare Rohrleitung begrenzende Rohraufnahme mit einer Außenschale, ein zwischen Außenschale angeordnetes Isoliersystem mit einer Wärmedämmung aus festem Isolationswerkstoff und eine Haltevorrichtung zur Aufnahme und Weitergabe auf die Rohrleitung und auf eine Basis wirkender Rohrkräfte und -Momente aufweist, dass die Haltevorrichtung eine Anschlagseinrichtung mit mindestens einem Anschlagelement zumindest zur Aufnahme und Weitergabe axialer Rohrkräfte an die Rohraufnahme aufweist und dass die Außenschale und die Wärmedämmung jeweils mindestens eine Formteilung mit einer Teilung senkrecht zur Querschnittsebene der Rohraufnahme aufweisen. Zur Montage des Rohrlagers können folgende Schritte vorgesehen sein:
Aufbringen der durch die Formteilung gebildeten Formteile der Rohraufnahme radial über die Rohrleitung in eine Einbaulage hinein, wobei währenddessen und/oder anschließend ein axiales Ausrichten derselben auf der Rohrleitung erfolgen kann,
Positionierung und Festlegen jeweils mindestens eines Anschlagelementes an bezüglich der axialen Richtung beiden Seiten der Rohraufnahme an einer schmalflächigen, sich in Einbaulage in axialer Richtung der Rohrleitung längs erstreckenden und als Verbindungsseitenfläche ausgebildeten Seitenfläche außenseitig an der Rohrleitung, dass das Anschlagelement mittelbar über eine Krafteinleitungshilfe kraft- und/oder formschlüssig in axialer Richtung an der Rohraufnahme anliegt, wobei die Krafteinleitungshilfe lose bleibend an dem Anschlagelement anliegt, und
Festlegen der Formteile auf der Rohrleitung in einer relativen Lage zueinander.

Ein axiales Ausrichten kann zur Korrektur des axialen Sitzes der Rohraufnahme auf der Rohrleitung erfolgen, um beispielsweise einer Abweichung einer geplanten Position der Rohraufnahme von der sich im Laufe des Baues der Rohrleitung sich tatsächlich ergebenden Position der Rohraufnahme auf der Rohrleitung Rechnung zu tragen. Das Festlegen der Formteile auf der Rohrleitung kann auch vor Festlegen der Anschlagselemente erfolgen. Die Krafteinleitungshilfe kann, wie zuvor beschrieben, als Kreisringscheibe ausgebildet sein, die zur radialen Montage in mindestens zwei Kreisringssektore geteilt ist. Die Kreisringssektore können vor, mit oder nach der Montage des Rohrlagers über den Rohrabschnitt radial über die Rohrleitung gebracht und zur Kreisringscheibe zusammengefügt, insbesondere verschweißt werden. Somit kann das Verschweißen zur Kreisringscheibe axial entfernt zur Rohraufnahme erfolgen, wodurch eine thermische Belastung der Rohraufnahme infolge des Schweißprozesses vollständig vermieden werden kann. Es kann bezüglich der axialen Richtung beidseitig des Rohrlagers jeweils eine Kreisringscheibe vorgesehen sein.

Die Kreisringscheibe kann einen Innenradius, der größer als der Außendurchmesser des Rohrabschnittes ist, und eine in Einbaulage dem Anschlagelement zugewandte erste Kreisringseitenfläche und eine zweite Kreisringseitenfläche aufweisen, die in Einbaulage der Rohraufnahme zugewandt ist und axial seitlich an derselben vorzugsweise unmittelbar anliegt. Zur Montage kann die zusammengefügte Kreisringscheibe koaxial zum Rohrabschnitt positioniert werden und an ihrer zweiten Kreisringseitenfläche zur vorzugsweise leicht kraft- und/oder formschlüssigen Anlage oder zur lose bleibenden Anlage axial stirnseitig an der Wärmedämmung positioniert werden. Anschließend können die Anschlageselemente axial gegen die erste Kreisringfläche geführt und an der Rohrleitung festgelegt werden, wobei sie lose bleibend an dem zugehörigen Anschlagelement anliegen können.

Ferner kann die Haltevorrichtung mindestens eine Tragkonstruktion zur Abstützung und/oder Aufhängung des Rohrlagers an der Basis aufweisen. Die Tragkonstruktion kann vor, mit oder nach der Montage des Rohrlagers außenseitig zur kraft- und/oder formschlüssigen Abstützung des Rohrlagers und/oder kraft- und/oder formschlüssigen Aufhängung des Rohrlagers an der Basis gebracht werden. Hierzu kann die Tragkonstruktion einer örtlich ausgebildeten Basis angepasst und/oder die Basis der Tragkonstruktion angepasst werden, indem die Basis zum Beispiel zum Rohrlager hin gebaut wird. Dies wird vereinfacht, wenn die Basis beispielsweise in Form eines relativ leicht veränderbaren Stahlgerüstbaues ausgebildet ist.

Die vorliegende Erfindung wird im Folgenden anhand mehrerer in einer Zeichnung dargestellter Ausführungsbeispiele näher erläutert. In der Zeichnung zeigen:
- Fig. 1: eine perspektivische Seitenansicht einer ersten Ausführungsform eines kälteisolierten Rohrlagers mit Rohrleitung und auf einer Basis,
- Fig. 2a: eine perspektivische Seitenansicht der ersten Ausführungsform des Rohrlagers gemäß Figur 1, wobei ein Bereich einer Wärmedämmung weggelassen ist, mit einem als Schlitten ausgebildeten Fuß,
- Fig. 2b: eine perspektivische Seitenansicht der Ausführungsform des Rohrlagers gemäß Figur 2a, wobei hier das Rohrlager an der Basis festgelegt ist.
- Fig. 3: eine perspektivische Seitenansicht gemäß Figur 2a, wobei ein Teil einer Haltevorrichtung des Rohrlagers als Explosionszeichnung dargestellt ist,
- Fig. 4a: und 4b jeweils eine Schnittansicht eines Ausschnittes IV gemäß Figur 2a,
- Fig. 5: eine Schnittansicht eines Ausschnittes V gemäß Figur 2a,
- Fig. 6: eine perspektivische Seitenansicht einer weitern Ausführungsform des Rohrlagers mit Rohrleitung und auf der Basis,
- Fig. 7: eine perspektivische Draufsicht auf eine weiteren Ausführungsform des Rohrlagers mit Rohrleitung und auf der Basis,
- Fig. 8: eine perspektivische Seitenansicht ähnlich der Ausführungsform des Rohrlagers gemäß Figur 2, jedoch mit einem als Rechteck-U-Profil ausgebildeten Fuß,
- Fig. 9a: und 9b zwei Seitenansichten einer weiteren Ausführungsform des Rohrlagers auf der Basis, ohne Anschlagseinrichtung und ohne Rohrleitung,
- Fig. 10a: und 10b zwei Seitenansichten einer weiteren Ausführungsform des Rohrlagers auf der Basis, ohne Anschlagseinrichtung und ohne Rohrleitung,
- Fig. 11a bis 11c: jeweils eine Seitenansicht einer weiteren Ausführungsform des Rohrlagers auf der Basis, ohne Anschlagseinrichtung und ohne Rohrleitung,
- Fig. 12: eine Seitenansicht einer weiteren Ausführungsform des Rohrlagers auf der Basis, ohne Anschlagseinrichtung und ohne Rohrleitung und

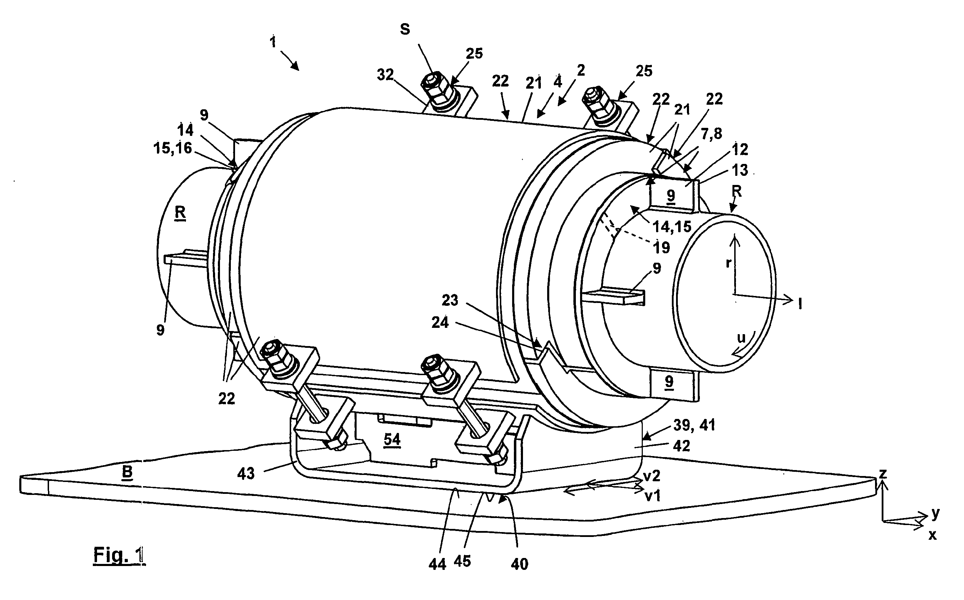

In den Figuren 1 bis 12 sind in verschiedenen Ansichten und Teilansichten mehrerer Ausführungsformen eines kälteisolierten Rohrlagers 1 für eine hier als Tieftemperaturrohrleitung ausgebildeten Rohrleitung R dargestellt. Das Rohrlager 1 umfasst eine Rohraufnahme 2, die einen Aufnahmeraum 3 für einen Rohrabschnitt Ra der Rohrleitung R begrenzt. Die Rohraufnahme 2 weist eine Außenschale 4 und eine zwischen Außenschale 4 und Aufnahmeraum 3 angeordnetes Isoliersystem mit einer Wärmedämmung 6 aus festem Isolationswerkstoff auf. Ferner umfasst das Rohrlager 1 eine Haltevorrichtung 7 zur Aufnahme und Weitergabe von auf die Rohrleitung R und auf eine Basis B wirkenden Kräften und Kraftmomenten. Die Haltevorrichtung 7 weist eine Anschlagseinrichtung 8 mit Anschlagelementen 9 zur Aufnahme und Weitergabe axialer Rohrkräfte an die Rohraufnahme 2 und/oder an der Basis B auf. Die Anschlagelemente 9 sind, wie beispielsweise in Fig. 1 gezeigt, in einer Einbaulage an einer schmalflächigen sich in Einbaulage in axialer Richtung x längs erstreckenden als Verbindungsseitenfläche 10 ausgebildeten Seitenflächen außenseitig an der Rohrleitung R verschweißt ist, welches hier mittels Schweißkehlnähten 11 durchgeführt ist. Wie der Zeichnung deutlich entnehmbar, sind die Anschlagelemente 9 jeweils plattenförmig mit großen Seitenflächen 12 und die großen Seitenflächen 12 verbindenden Schmalseitenflächen 13 ausgebildet, wobei eine der Schmalseitenflächen 13 die Verbindungsseitenfläche 10 bildet. Die jeweiligen Schmalseiten 13.1 der Schmalseitenflächen 13 erstrecken sich somit in umfänglicher Richtung u. Die Schmalseitenflächen 13 und hier auch die Anschlagelemente 9 erstrecken sich bezüglich ihrer Längsrichtung 1 in axialer Richtung x. Damit wird eine umfängliche, thermisch bedingte Änderung der Rohrleitung durch die aufgeschweißten Anschlagelemente nur geringfügig behindert, sodass hier keine unverträglichen Rohrspannungen auftreten können.

Beidseitig der Rohraufnahme 2 sind jeweils vier Anschlagelemente 9 vorgesehen, die in umfänglicher Richtung u gleich beabstandet sind und die jeweils mit einer Schmalseitenfläche 13 an einer Krafteinleitungshilfe 14 angreifen. Die Krafteinleitungshilfe 14 ist in den hier gezeigten Ausführungsformen des Rohrlagers 1 als hier als Kreisringscheibe 15 ausgebildetes Ringelement 16 ausgebildet. Sie liegt mit einer ersten Kreisringseitenfläche 17.1 hier unmittelbar an der Schmalseitenfläche 13 an den zugeordneten Anschlagelementen 9 und axial mit einer zweiten Kreisringseitenfläche 17.2 hier unmittelbar an der Wärmedämmung 6 aus festem Isolationswerkstoff an. Somit werden die Kräfte, die über die an der Kreisringscheibe 15 anliegende Schmalseitenfläche 13 der Anschlagelemente 9 eingeleitet werden, großflächig und damit unter geringem Druck in die Wärmedämmung 6 und in die Rohraufnahme 2 eingeleitet, so dass zur Krafteinleitung keine weitere Bewehrung der Wärmedämmung notwendig ist.

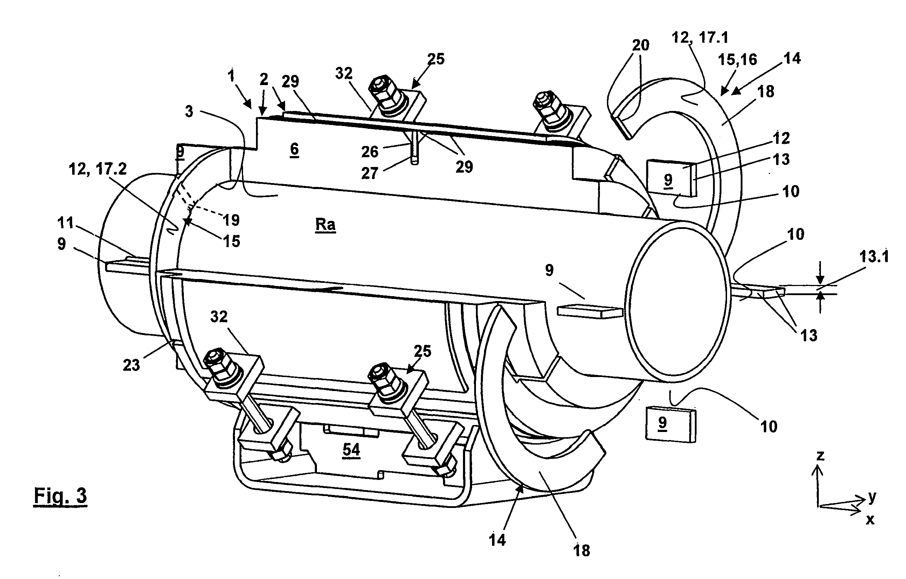

Ein weiterer wesentlicher Vorteil des erfindungsgemäßen Rohrlagers 1 wird insbesondere anhand der Darstellung in Fig. 3, einer perspektivischen Seitenansicht des Rohrlagers 1, deutlich, wobei in Figur 3 der hier rechte Teil der Haltevorrichtung 7 als Explosionszeichnung dargestellt ist und zum leichteren Verständnis ein umfänglicher Teil der Rohraufnahme 2 entfernt ist:

Die Kreisringscheibe 17 besteht hier aus zwei gleich ausgebildeten Ringsektoren 18, die zum Einbau des Rohrlagers 1 radial von außen über die Rohrleitung R gebracht werden und stirnseitig stoffschlüssig miteinander verbunden, d.h. hier miteinander verschweißt werden. Letzteres ist durch eine mit gestrichelten Linien angedeutete Schweißnaht 19 an der in Fig. 3 linken Kreisringscheibe 15 gezeigt. Die Schweißnaht 19 ist zweckmäßig soweit abgeschliffen, dass sie nicht über den Querschnitt der Kreisringscheiben 15 hinausragt. Zur Schweißung sind an den Ringsektoren 18 beidseitige Abfasungen 20 vorgesehen, um an beiden Seiten jeweils eine leichte Schweißung durchführen zu können. Bei vollständiger Schweißung ist die Schweißnaht 18 als Doppel-V-Schweißnaht ausgebildet. Zur axialen Positionierung der Rohraufnahme 2 auf der Rohrleitung R können somit die Bauteile der Anschlagseinrichtung 8, die hier als Kreisringscheibe 15 ausgebildete Krafteinleitungshilfe 14 und die Anschlagselemente, in situ axial seitlich gegen beide axiale Seitenflächen 21 hier der Wärmedämmung 6 geführt und mit der Rohrleitung R kraft- und formschlüssig, hier mittels Klebung, verbunden werden. Somit werden Rohrlager 1 und Rohrleitung R in bestimmter relativer Position zueinander in situ festgelegt.

Zum radialen Aufbringen der Rohraufnahme 2 über die Rohrleitung R wird im Prinzip ähnlich verfahren, wie es bereits aus der oben erwähnten Druckschrift DE 10 2005 013 728 A1 bekannt ist, indem Außenschale 4 und Wärmedämmung 6 jeweils in zwei als Halbschalen 21 ausgebildeten Formteilen 22 geteilt sind, wobei die Wärmedämmung hier eine stufenförmige Teilung 23 mit einem Spalt 24 in Einbaulage über dem Rohrabschnitt Ra aufweist. Die Wärmedämmung ist hier aus einem bereits auf die erforderlichen Maße vorgefertigten, gegossenen Polyurethan-Schaumstoff-Hohlzylinder gefertigt, der anschließend in der entsprechenden stufenförmigen Teilung geschnitten ist. Dies hat den Vorteil, dass die gegossenen Oberflächen, d.h. die des Schaumstoff-Hohlzylinders, entsprechend dem Gießvorgang geschlossen sind und somit einen erschwerten Wärmeübergang aufweisen. Zur Vermeidung von Wärmebrücken ist der Spalt 24, was hier nicht explizit gezeigt, in Einbaulage mit elastischem Isolationsmaterial 28 gefüllt. Ferner wird hier die Wärmedämmung 6, welches hier jedoch nicht explizit gezeigt, in Einbaulage mit dem Rohrabschnitt Ra verklebt. Die Rohraufnahme 2 wird zur Montage des Rohrlagers 1 an bestimmter Stelle radial über die Rohrleitung gebracht, ihr axiale Position eventuell aktuellen Notwendigkeiten aus beispielsweise Abweichungen in der Montage von der Planung angepasst und eventuell verklebt, wobei während und/oder nach der Verklebung die Halbschalen 21 der Außenschale 4 radial über die Wärmedämmung 6 gebracht und so mittels Spannelementen 25 der Haltevorrichtung 7 über der Wärmedämmung 6 verspannt werden, dass sie die Wärmedämmung 6 in radial nach Innen gegen den Rohrabschnitt Ra im Aufnahmeraum 3 pressen.

Zur relativen axialen Lagefixierung von Außenschale 4 und Wärmedämmung 6 zueinander weisen die Halbschalen 21 jeweils einen plattenförmige Innenringsektor 26 auf, der radial in einer vorgesehen radiale und umfängliche Ausnehmung 27 der Wärmedämmung 6 eingreift und axial seitlich in der Ausnehmung 27 an der Wärmedämmung 6 anliegt. Im Übrigen sind, ähnlich wie in der DE 10 2005 013 728 A1 offenbart und hier ausdrücklich darauf verwiesen, zwischen Außenschale 21 und Wärmedämmung 6 weiteres, hier dunkel eingezeichnetes Isolationsmaterial 29 zur Abdichtung der Wärmedämmung 6 vorgesehen.

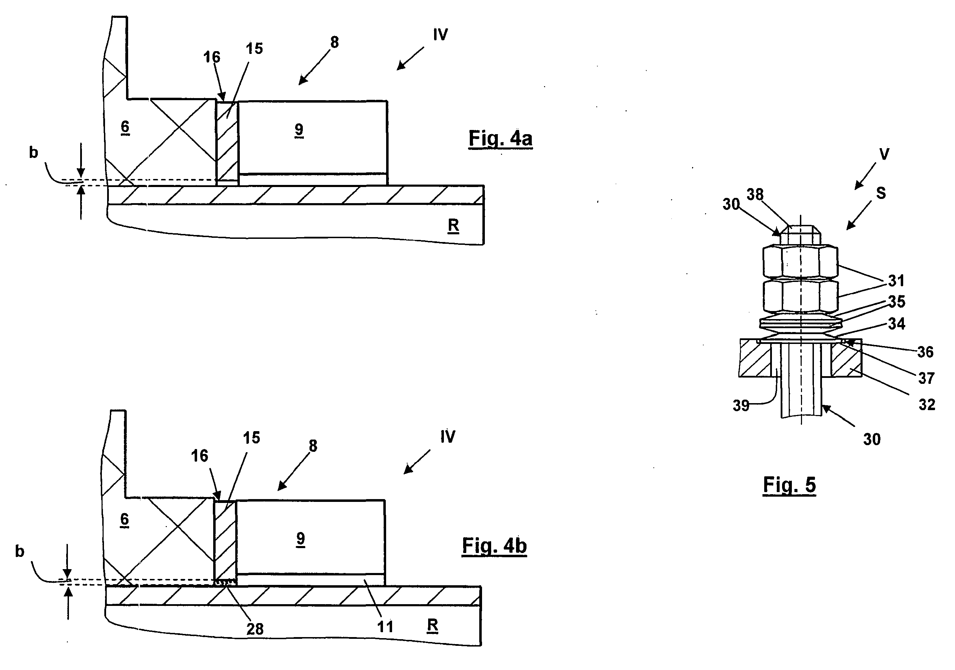

Wiederum ein weiterer wesentlicher Vorteil des erfindungsgemäßen Rohrlagers 1 wird anhand der Detaildarstellung in den Figuren 4a und 4b verdeutlicht. In diesen Figuren wird ein Teillängsschnitt gezeigt, in dem die Rohrleitung R, die Kreisringscheibe 15 und die Wärmedämmung 6 geschnitten sind. Deutlich diesen Figuren entnehmbar, ist die zur Rohrleitung R koaxiale Kreisringscheibe 15 radial von der Außenseite der Rohrleitung R beabstandet, wobei der Abstand b hier wenige Millimeter bis Zentimeter betragen kann. Dadurch wird ein Wärmeübergang von der Rohrleitung R auf Kreisringscheibe 15 infolge Wärmeleitung vermieden. Ferner kann die Kreisringscheibe 15 eine thermisch bedingte Umfangsänderung der Rohrleitung R nicht oder nur geringfügig behindern. Zudem können eventuelle Formungenauigkeiten der Ringsektoren 18 ausgeglichen werden. Ferner ist den Figuren 4a und 4b entnehmbar, dass die Anschlagelemente 9 über hier eine Kehlschweißnaht 19 auf der Rohrleitung R festgelegt sind. Die Anschlagelemente 9 liegen jedoch jeweils mit ihrer Schmalseitenfläche 13 an der Kreisringscheibe 15 lose bleibend an. Somit sind ein radialer und umfänglich erfolgender Kraft-übergang sowie ein Wärmeübergang zwischen Kreisringscheibe 15 und Anschlagelemente 9 erschwert. Ferner ist hiermit ein Montageschritt, die Verbindung von Anschlagselemente 9 mit Kreisringscheibe 15, eingespart. In der Ausführungsform des Rohrlagers 1 gemäß Figur 4b ist zusätzlich elastisches Isolationsmaterial 28 vorgesehen, wodurch der Wärmeübergang von der Rohrleitung R auf Kreisringscheibe 15 weiter erschwert und ein Positionierung des Ringelementes 16 bzw. der Kreisringscheibe 15 mit radialer Beabstandung von der Rohrleitung R erleichtert.

Schließlich liegt das Ringelement 16 bzw. die Kreisringscheibe 15 seitlich, d.h. hier über die zweite Kreisringseitenfläche 17.2, lose bleibend an der Wärmedämmung 6 an, wodurch ebenfalls die zuvor genannte Vorteile, wie Verminderung eines Wärmeüberganges sowie der umfänglichen und radialen Kraftübertragung, erzielt werden.

Der Formteile 22 von Außenschale 4 und Wärmedämmung 7 werden in Einbaulage auf der Rohrleitung R verspannt. Hierzu sind Schraubverbindungen S mit Schraubbolzen 30 und gekonterte Schraubenmuttern 31 sowie an der Außenschale 4 festgelegte Zapfen 32 mit Schraubenöffnung 33 in umfänglicher Richtung u zur Ausbildung der Schraubenverbindungen vorgesehen, wie sie im Wesentlichen bereits aus der DE 10 2005 013 728 A1 bekannt sind. Abweichend dazu sind die Spannelemente 25 in Form von Tellerfedern 34 vorgesehen, die für eine konstante Vorspannung der Schraubverbindungen S sorgen. Eine Detailansicht mit einem Ausschnitt der Schraubenverbindung S ist in Figur 5 gezeigt. Die Schraubenöffnung 33 weist an der der Tellerfeder 35 zugewandten Seite eine stufenförmige Erweiterung 36 mit einer Schulter 37 auf, auf der sich die der Schraubenöffnung 33 nächste Tellerfeder 35 so abstützt, dass sie sich von der Schulter 37 konisch zum Ende 38 des Schraubbolzens 30 verjüngt und so gewölbeartig stabil in der Schraubenöffnung 33 gehalten wird. Der Durchmesser der Schraubenöffnung 33 ohne Erweiterung ist zudem größer als der Durchmesser des Schraubenbolzens 30, während eine hier nicht sichtbare Öffnung der Tellerfeder dem Außendurchmesser des Schraubbolzens 30 angepasst ist. Die stabile Abstützung der Tellerfeder 34 sowie die unterschiedlichen Durchmesser bewirken, dass der Schraubbolzen 30 in der Schraubenöffnung 33 zentriert gehalten wird und dass minimale Reibungen zwischen Schraubbolzen 30 bzw. der Tellerfeder 34 und der Schraubenöffnung 33 auftreten. Dadurch kann eine möglichst gleichbleibende Anpresskraft erzielt werden, mittels der die Rohraufnahme 2 bzw. die Wärmedämmung 6 gegen den Rohrabschnitt Ra gepresst wird. Wie ferner der Figur 5 entnehmbar, sind zwei weitere Tellerfedern 35 vorgesehen. Alle drei Tellerfedern 34, 35 sind in bekannter Weise zueinander fluchtend und in wechselnder Anordnungsfolge und damit quasi "in Reihe geschaltet" angeordnet. Hierdurch wird eine Vergrößerung eines Federweges erzielt, innerhalb dem die Anpresskraft etwa konstant gehalten werden kann.

Die Haltevorrichtung 7 weist ferner eine Tragkonstruktion 39 hier allein zur Abstützung des Rohrlagers 1 an der Basis B auf. Diese kann umfasst ein Auflager 40. Das Auflager gemäß Figur 1 ist als reines Gleitlager konzipiert. Hierzu umfasst die Tragkonstruktion 39 ein an der Außenschale 4 festgelegtes Fußelement 41, das hier als U-förmig Schlitten 42 mit abgerundeten Kanten 43 ausgebildet ist und eine erste Gleitfläche 44 aufweist, mit der der Schlitten 42 auf einer zugeordneten zweiten Gleitfläche 45 des Auflagers 40 an der Basis B abgleiten kann. Die abgerundeten Kanten 43 sind zweckmäßig senkrecht zur zu erwartenden Hauptverschiebung des Rohrlagers 1 infolge thermisch bedingter axialer Dimensionsänderungen der Rohrleitung R angeordnet, wobei die Hauptverschiebung hier in axialer Richtung x erfolgt. Dank der verschieblichen Lagerung des Rohrlagers 1 kann sich die Rohrleitung R unter thermischer Einwirkung ungehinderter dehnen oder zusammenziehen, so dass die Rohrleitung R geringer belastet wird, wobei jedoch eine Stützwirkung des Rohrlagers 1 erhalten bleibt.

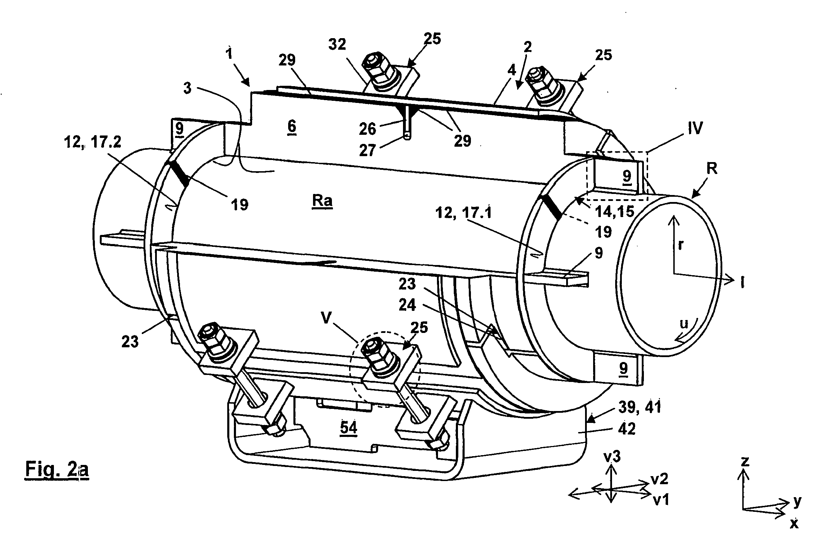

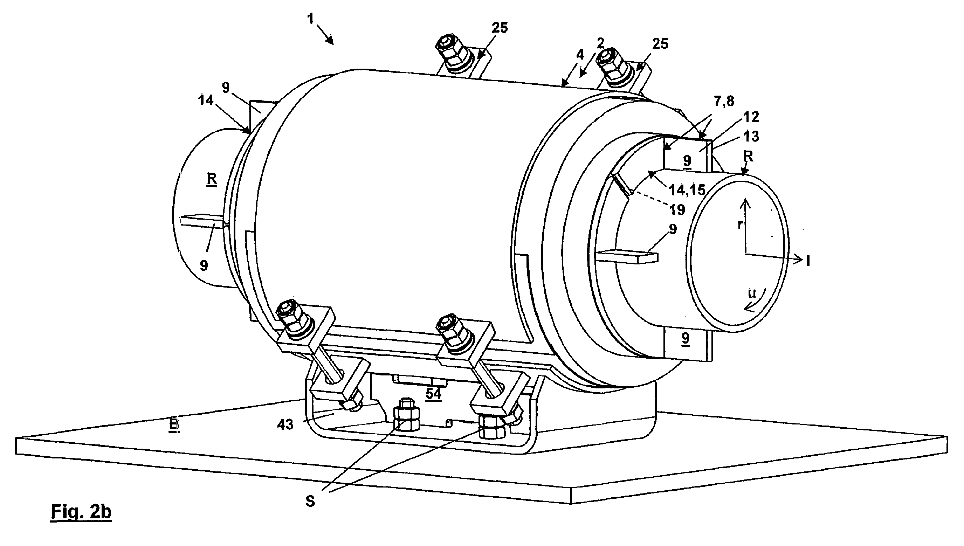

In der Ausführungsform des Rohrlagers 1 gemäß Figur 1 ist die Bewegung des Rohrlagers 1 in parallel zu den Gleitflächen 44, 45 und hier senkrecht nach oben sowie in entsprechenden Drehungen in den Gleitflächen 44, 45 und senkrecht hierzu nicht begrenzt, so dass hier fünf Freiheitsgrade in der Bewegung vorliegen. Nahezu gegensätzlich hierzu weist das Rohrlager 1 gemäß seiner Ausführungsform in Figur 2b ein Auflager 40 auf, das auf der Basis B hier mittels Schraubverbindungen S festgelegt ist. Somit ist dieses Rohrlagers 1 gemäß Figur 2b als Festpunktrohrlager ausgelegt. Die in den Figuren 1, 6 und 7 eingezeichnete plattenartige Basis B, an der das Auflager 40 mit der zweiten Gleitfläche 45 des Rohrlagers 1 angeordnet ist, ist lediglich als Ausschnitt anzusehen.

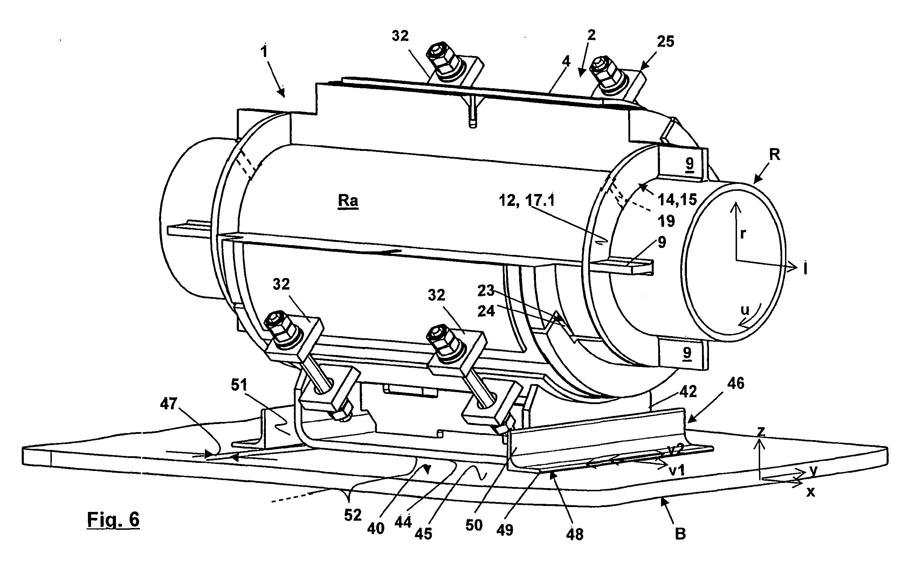

Die Bewegung und insbesondere die Gleitbewegung des Schlittens 42 gemäß der in Figur 6 dargestellten Ausführungsform des Rohrlagers 1 sind in axialer Verschiebungsrichtung v1 gleich der axialen Richtung x mittels Anschlägen 46 auf einen ersten Verschiebungsbereich 47 begrenzt, während eine Verschiebung in Y-Richtung y nicht begrenzt ist. Die Anschläge 46 sind hier als einfache Winkelprofile 48 ausgebildet, die mit einem ersten Schenkel 49 auf der Basis B festgesetzt sind und mit einem zweiten Schenkel 50 der axialen Bewegung des Schlittens 42 eine Anschlagfläche 51 entgegensetzen.

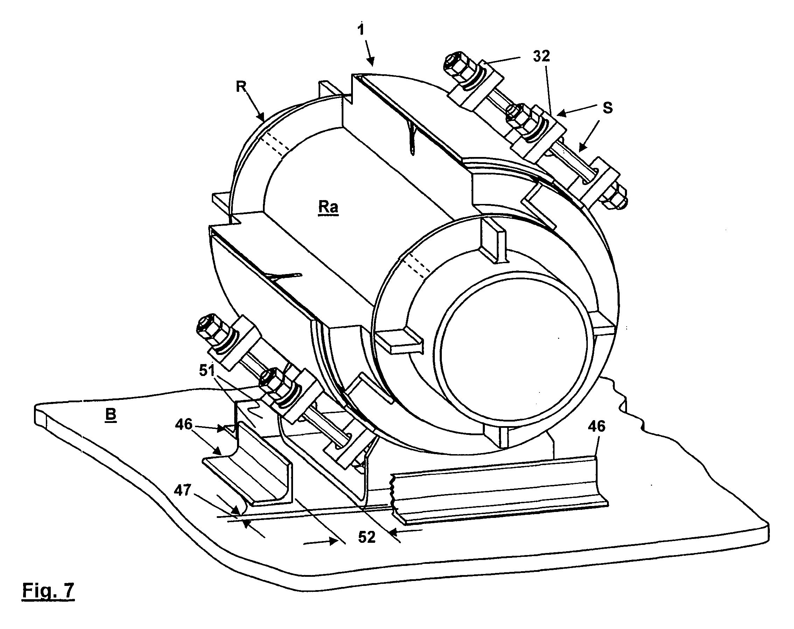

In der in Figur 7 dargestellten Ausführungsform des Rohrlagers 1 sind senkrecht zu den Anschlägen 46 weitere senkrecht zur axialen Richtung x und in Gleitflächen 44,45 wirksame Anschläge 46 in Form von Winkelprofilen 48 vorgesehen, mittels derer die Gleitbewegung des Schlittens 42 in einer zweiten Verschiebungsrichtung v2 senkrecht zur ersten Verschiebungsrichtung v1 auf einen zweiten Verschiebungsbereich 52 begrenzt wird.

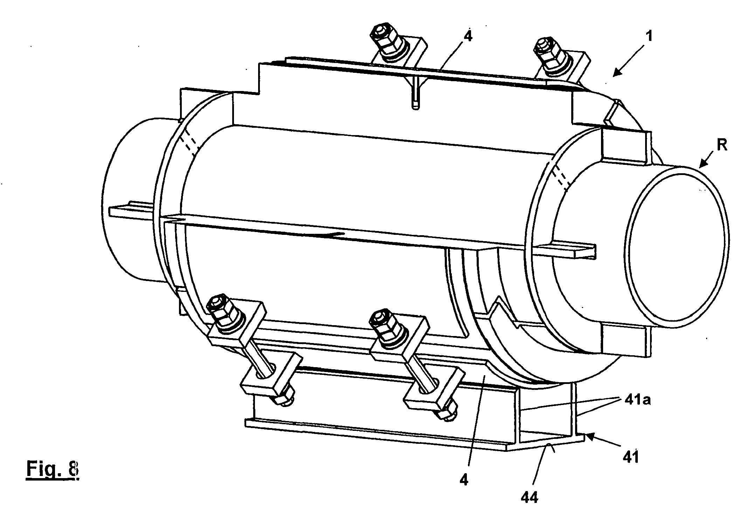

Eine Variante des Fußelementes 41 ist in der Ausbildungsform des Rohrlagers 1 gemäß Figur 8 gezeigt. Hier ist das Fußelement 41 als einfaches Rechteck-U-Profil ausgebildet, das mit seinen Schenkeln 41a an der Außenschale 4 festgelegt ist.

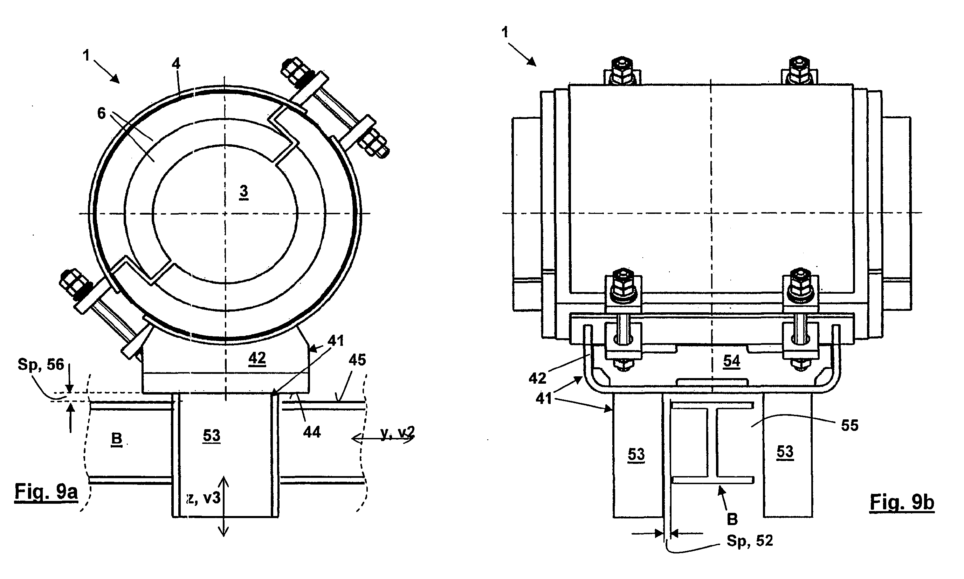

In den Figuren 9 bis 12 werden mögliche Ausführungsformen des Rohrlagers 1 mit unterschiedlichen Freiheitsgraden in seiner Anlagerung an die Basis B gezeigt, wobei die Ausführungsformen bis auf die Weiterbildung der Tragkonstruktion 39 gleich der gemäß Figur 1 sind und zur klareren Darstellung die Rohrleitung fortgelassen ist.

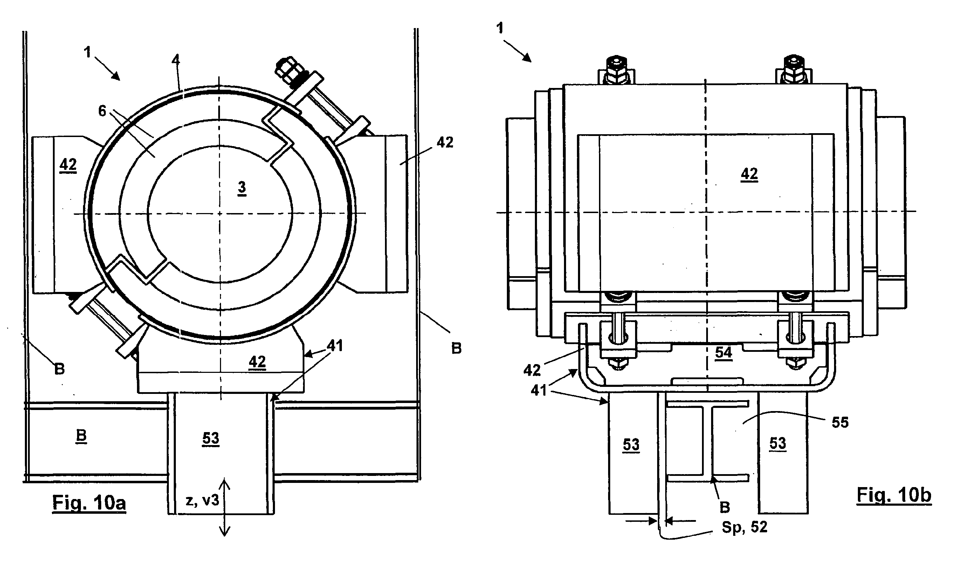

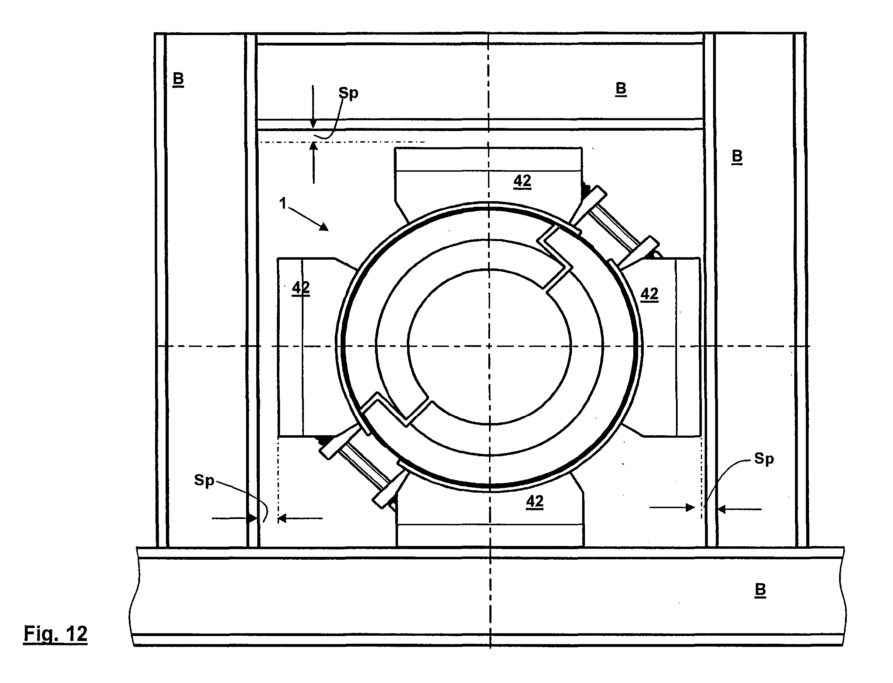

In der Ausführungsform gemäß Figur 9 weist Tragkonstruktion 39 zwei in Einbaulage vertikale und nach unten sich über die erste Gleitfläche erstreckende Vorsprünge 53 auf, die bezüglich der axialen Richtung x fluchtend hintereinander angeordnet sind, mit dem in Figur 1 als Schlitten 42 ausgebildeten Fußelement 41 und über eine Versteifung 54 mit der Außenschale 4 verbunden sind und einen in Einbaulage nach unten hin sowie in Y-Richtung y offenen Zwischenraum 55 begrenzen. Entsprechend in Y-Richtung y ist ein hier als Doppel-T-Träger ausgebildetes Basisbauteil zur Abstützung des Fußelementes 41 bez. des Rohrlagers 1. angeordnet. Somit ist das Rohrlager 1 generell in zwei Richtungen, in Y-Richtung y, das heißt horizontal und senkrecht zur axialen Richtung x, und in vertikaler Richtung z, in einem hier nicht weiter als begrenzt eingezeichneten zweiten Verschiebungsbereich 52 und in einem mittels der ersten Gleitfläche 44 des Schlittens 42 begrenzten dritten Verschiebungsbereich 56 über das Fußelement 41 an der Basis B verschieblich gelagert. In Figur 9 sowie in den nachfolgenden Figuren 10 und 12 ist das Basisbauteil, an dem das Fußelement 41 anstößt, in einem geringen Abstand zu dem Fußelement 41 gezeichnet, um anzudeuten, dass es wegen der in der Praxis häufig recht großen Abmessungen der Rohrleitung R sowie des Rohrlagers 1 es schon von der Montage her vorteilhaft ist, hier ein bestimmtes Spiel Sp vorzusehen. Da dieses Spiel Sp durchaus im Bereich von einigen Zentimetern oder Dezimetern liegen kann, ist dieses streng genommen als Verschiebungsbereich 47, 52, 56 anzusehen, wobei jedoch angesichts der in der Praxis üblichen großen Abmessungen der Rohrleitungslänge ein Spiel Sp von einigen Zentimetern oder Dezimetern auftreten kann.

In der Ausführungsform gemäß Figur 10 weist Tragkonstruktion 39 zusätzlich zu der Ausführungsform des Rohrlagers 1 gemäß Figur 9 zwei weitere Schlitten 42 auf, deren erste Gleitflächen 44 mit ihren Flächennormalen in Einbaulage in Y-Richtung y weisen. Hierzu sind entsprechende zum Auflager 40 zugehörige zweite Gleitflächen 45 an der hier sehr schematisch wiedergegebenen Basis B vorgesehen. Da jedoch, bis auf ein bestimmtes Spiel Sp, infolge der Vorsprünge 53 eine axiale Verschiebbarkeit des Rohrlagers 1 nicht zugelassen ist, dienen die zweiten Gleitflächen eher als Anschläge. Somit ist das Rohrlager 1, abgesehen von dem oben erwähnten eventuellen Spiel Sp von bis zu mehreren Zentimetern, lediglich in vertikaler Richtung z verschieblich an der Basis B angelagert. Dennoch wird in dieser Konstruktion mit Schlitten 42 ein die Herstellung und den Einbau des Rohrlagers 1 wesentlicher Vorteil gesehen, da hierdurch bestimmte gleiche Bauteile, wie Schlitten 42, für unterschiedliche Ausführungsformen des Rohrlagers 1 eingesetzt werden, die mit einem bestimmten Einsatz und Einbau des Rohrlagers 1 erst ihre tatsächlich zugewiesene Funktion, d.h. hier als Gleitlager oder als (großflächiger) Anschlag, erhalten. Somit kann eine entsprechende leichtere serielle Fertigung und eine einfachere Vormontage der Gleitlager einschließlich des Fußelementes vor der Einpassung des Rohrlagers 1 auf die Rohrleitung R erfolgen.

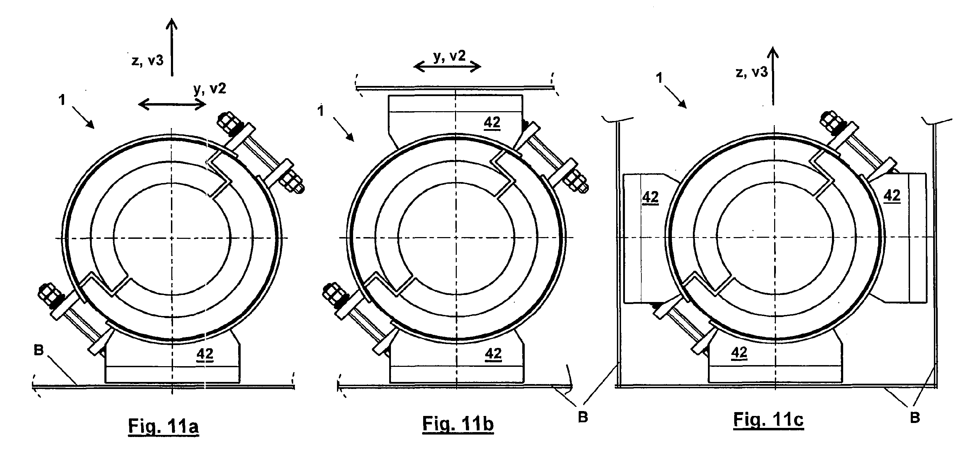

In den Figuren 11a bis 11c sind Ausführungsformen des Rohrlagers 1 mit drei möglichen Anordnungen der Fußelemente 41 gezeigt. Wie schon rein aus der Anschauung ersichtlich ist, entspricht die Ausführungsform des Rohrlagers 1 gemäß Figur 11a der gemäß Figur 1. In Figur 11b weist das Rohrlager 1 in Einbaulage oberhalb und unterhalb der Rohraufnahme 2 jeweils einen Schlitten 42 mit einer ersten Gleitfläche 44 auf, die als Anschläge in vertikaler Richtung z oder zum Abgleiten des Rohrlagers 1 in axialer Richtung x und/oder in Y-Richtung y an der Basis B eingesetzt werden können. Bei der Ausführungsform des Rohrlagers 1 gemäß Figur 11c ist eine vertikaler Bewegung z sowie eine Verschiebung des Rohrlagers 1 in axialer, d.h. in erster Verschiebungsrichtung v1 möglich.

Schließlich ist in Figur 12 der mögliche Anlagerungsfall des Rohrlagers 1 wiedergegeben, in dem das Rohrlager 1, bis auf das oben erläuterte Spiel Sp, nur in axialer Richtung x verschieblich angeordnet ist, da es sich beidseitig in vertikaler Richtung z und in Y-Richtung y über die als Schlitten 42 ausgebildeten Fußelemente 42 an der hier als Rahmen ausgebildeten Basis B abstützt.

### Kälteisoliertes Rohrlager und Montage

### Bezugszeichenliste

- 1: Rohrlager
- 2: Rohraufnahme
- 3: Aufnahmeraum
- 4: Außenschale
- 6: Wärmedämmung
- 7: Haltevorrichtung
- 8: Anschlagseinrichtung
- 9: Anschlagelement
- 10: Verbindungsseitenfläche
- 11: Schweißkehlnaht
- 12: Seitenfläche
- 13: Schmalseitenfläche
- 13.1: Schmalseite
- 14: Krafteinleitungshilfe
- 15: Kreisringscheibe
- 16: Ringelement
- 17.1: erste Kreisringseitenfläche
- 17.2: zweite Kreisringseitenfläche
- 18: Ringsektor
- 19: Schweißnaht
- 20: Abfasung
- 21: Halbschale
- 22: Formteile
- 23: Teilung
- 24: Spalt
- 25: Spannelement
- 26: Innenringsektor
- 27: Ausnehmung
- 28: Isolationsmaterial
- 29: Isolationsmaterial
- 30: Schraubbolzen
- 31: Schraubenmutter
- 32: Zapfen
- 33: Schraubenöffnung
- 34: Tellerfeder
- 35: Tellerfeder
- 36: Erweiterung
- 37: Schulter
- 38: Ende
- 39: Tragkonstruktion
- 40: Auflager
- 41: Fußelement
- 41.1: Schenkel
- 42: Schlitten
- 43: Kante
- 44: erste Gleitfläche
- 45: zweite Gleitfläche
- 46: Anschlag
- 47: erster Verschiebungsbereich
- 48: Winkelprofil
- 49: erster Schenkel
- 50: zweiter Schenkel
- 51: Anschlagfläche
- 52: zweiter Verschiebungsbereich
- 53: Vorsprung
- 54: Versteifung
- 55: Zwischenraum
- 56: dritter Verschiebungsbereich
- b: Abstand
- l: Längsrichtung
- r: radiale Richtung
- u: umfängliche Richtung
- v1: erste Verschiebungsrichtung
- v2: zweite Verschiebungsrichtung
- v3: dritte Verschiebungsrichtung
- x: axiale Richtung
- y: Y-Richtung
- z: vertikale Richtung
- S: Schraubverbindung
- Sp: Spiel
- B: Basis
- R: Rohrleitung
- Ra: Rohrabschnitt

## Patentansprüche

1. Kälteisoliertes Rohrlagers für eine Rohrleitung, insbesondere für eine Tieftemperaturrohrleitung, mit einer einen Aufnahmeraum für einen Rohrabschnitt der Rohrleitung begrenzenden Rohraufnahme .(2), die eine Außenschale und ein zwischen Außenschale und Aufnahmeraum angeordnetes Isoliersystem mit einer Wärmedämmung aus festem Isolationswerkstoff aufweist, und mit einer Haltevorrichtung zur Aufnahme und Weitergabe von auf die Rohrleitung und auf eine Basis wirkenden Kräften und Kraftmomenten, wobei die Haltevorrichtung (7) eine Anschlagseinrichtung (8) mit mindestens einem Anschlagelement (9) zur Aufnahme und Weitergabe axialer Rohrkräfte an die Rohraufnahme (2) und/oder an die Basis (B) aufweist, das Anschlagelement (9) in Einbaulage an einer schmalflächigen, sich in Einbaulage in axialer Richtung (x) längs erstreckenden und als Verbindungsseitenfläche (10) ausgebildeten Seitenfläche außenseitig an der Rohrleitung (R) festgelegt ist und das mindestens eine Anschlagelement (9) in Einbaulage über eine vorgesehene Krafteinleitungshilfe (14) axial kraftwirksam an der Rohraufnahme (2) angreift, **dadurch gekennzeichnet, dass** die Krafteinleitungslife (14) lose bleibend an dem mindestens einen Anschlagelement anliegt.

2. Rohrlager nach Anspruch 1, **dadurch gekennzeichnet, dass** bezüglich der axialen Richtung (x) an beiden Seiten der Rohraufnahme (2) jeweils mindestens ein Anschlagelement (9) vorgesehen ist.

3. Rohrlager nach Anspruch 1 oder 2, **dadurch gekennzeichnet, dass** das Anschlagelement (9) plattenförmig mit großen Seitenflächen (12) und diese verbindenden Schmalseitenflächen (13) ausgebildet ist, wobei eine Schmalseitenfläche (13) die Verbindungsseitenfläche (10) zur Festlegung des Anschlagelementes (9) an der Rohrleitung (R) aufweist.

4. Rohrlager nach einem der Ansprüche 1 bis 3, **dadurch gekennzeihnet**, **dass** die Krafteinleitungshilfe (14) als in Einbaulage zumindest teilumfänglich angeordnetes Ringelement (16) mit einer in Einbaulage in Querschnittsebene verlaufenden, der Rohraufnahme (2) zugewandten und axial an der Rohraufnahme (2) angreifenden Seitenfläche (12) ausgebildet ist.

5. Rohrlager nach Anspruch 4, **dadurch gekennzeichnet, dass** das Ringelement (16) in Einbaulage zumindest bezüglich der axialen Richtung lose bleibend an der Wärmedämmung (6), anliegt.

6. Rohrlager nach Anspruch 4 oder 5, **dadurch gekennzeichnet, dass** das Ringelement (16) einen Innenradius aufweist und dass das Ringelement (16) bezüglich des Innenradius koaxial und radial beabstandet zur Rohrleitung (R) angeordnet ist.

7. Rohrlager nach einem der Ansprüche 4 bis 6, **dadurch gekennzeichnet, dass** das Ringelement (16) als Kreisringscheibe (15) ausgebildet ist.

8. Rohrlager nach einem der Ansprüche 4 bis 7, **dadurch gekennzeichnet, dass** das Ringelement (16) aus mindestens zwei Ringsektoren (18) zusammengesetzt ist, die zum Einbau des Rohrlagers (1) über die Rohrleitung (R) radial von außen über die Rohrleitung (R) bringbar und stirnseitig aneinander festlegbar sind.

9. Rohrlager nach einem der Ansprüche 1 bis 8, **dadurch** g e k e n n **zeichnet**, **dass** die Haltevorrichtung (7) eine Tragkonstruktion (39) zur Abstützung und/oder Aufhängung des Rohrlagers (1) an der Basis (B) aufweist und dass das Rohrlager (1) mittels der Tragkonstruktion (39) innerhalb eines ersten Verschiebungsbereiches (47) in einer axialen ersten Verschiebungsrichtung (v1 innerhalb eines zweiten Verschiebungsbereiches (52) in einer zur ersten Verschiebungsrichtung (v1) senkrechten tangentialen zweiten Verschiebungsrichtung (v2) und/oder innerhalb eines dritten Verschiebungsbereiches (56) in einer zur ersten Verschiebungsrichtung (v1) und zweiten Verschiebungsrichtung (v2) senkrechten radialen dritten Verschiebungsrichtung (v3) gleitverschieblich und/oder rollverschieblich an der Basis (B) angelagert ist.

10. Rohrlager nach Anspruch 9, **dadurch gekennzeichnet, dass** die Tragkonstruktion (39) ein Fußelement (41) aufweist, das fest mit der Rohraufnahme (2) verbunden ist, sich radial von der Rohraufnahme (2) erstreckt und dass das Fußelement (41) in Einbaulage gleitverschieblich in dem ersten Verschiebungsbereich (47) und/oder dem zweiten Verschiebungsbereich (52) an der Basis (B) angelagert ist.

11. Rohrlager nach einem der Ansprüche 1 bis 10, **dadurch gekennzeichnet, dass** die Außenschale (4) und die Wärmedämmung (6) jeweils mindestens eine Formteilung mit einer Teilung (23) senkrecht zur Querschnittsebene der Rohraufnahme (2) aufweisen.

12. Montage eines Rohrlagers (1) gemäß einem der Ansprüche 1 bis 11 über eine Rohrleitung (R), wobei das Rohrlager (1) eine einen Aufnahmeraum (3) für einen Rohrabschnitt (Ra) der Rohrleitung (R) begrenzende Rohraufnahme (2) mit einer Außenschale (4), ein zwischen Außenschale (4) angeordnetes Isoliersystem (5) mit einer Wärmedämmung (6) aus festem Isolationswerkstoff und eine Haltevorrichtung (7) zur Aufnahme und Weitergabe auf die Rohrleitung (R) und auf eine Basis (B) wirkender Rohrkräfte und -Momente aufweist, wobei die Haltevorrichtung (7) eine Anschlagseinrichtung (8) mit mindestens einem Anschlagelement (9) zumindest zur Aufnahme und Weitergabe axialer Rohrkräfte an die Rohraufnahme (2) aufweist und wobei die Außenschale (4) und die Wärmedämmung (6) jeweils mindestens eine Formteilung mit einer Teilung (23) senkrecht zur Querschnittsebene der Rohraufnahme (2) aufweisen, mit den Verfahrensschritten:
Aufbringen der durch die Formteilung gebildeten Formteile (22) der Rohraufnahme (2) radial über die Rohrleitung (R) in eine Einbaulage hinein und Festlegen der Formteile mit ihrer jeweiligen Teilung (23) gegeneinander in einer relativen Lage zueinander,
Positionierung und Festlegen jeweils mindestens eines Anschlagelementes (9) an bezüglich der axialen Richtung (x) beiden Seiten der Rohraufnahme (2) an einer schmalflächigen, sich in Einbaulage in axialer Richtung (x) der Rohrleitung (R) längs erstreckenden und als Verbindungsseitenfläche (10) ausgebildeten Seitenfläche außenseitig an der Rohrleitung (R), so dass das Anschlagelement (9) mittelbar über eine Krafteinleitungshilfe (14) kraft- und/oder formschlüssig in axialer Richtung (x) an der Rohraufnahme (2) anliegt, wobei die Krafteinleitungshilfe (14) lose bleibend an dem Anschlagelement anliegt.

13. Montage nach Anspruch 12, wobei die Krafteinleitungshilfe (14) als Kreisringscheibe (15) ausgebildet ist, die zur radialen Montage in mindestens zwei Ringsektoren (18) geteilt ist, **dadurch gekennzeichnet, dass** die Ringsektoren (18) vor, mit oder nach der Montage des Rohrlagers (1) über den Rohrabschnitt (Ra) radial über die Rohrleitung (R) gebracht werden und zur Kreisringscheibe (15) zusammengefügt und verschweißt werden, wobei bezüglich der axialen Richtung (x) zumindest auf einer Seite der Rohraufnahme (2) eine Kreisringscheibe (15) vorgesehen ist.

14. Montage nach Anspruch 13, wobei die Kreisringscheibe (15) einen Innenradius aufweist, der größer als der Außendurchmesser der Rohrleitung (R) bzw. dem Rohrabschnitt (Ra) ist, und eine in Einbaulage dem Anschlagelement (9) zugewandte erste Kreisringseitenfläche (17.1) und eine der Rohraufnahme (2) zugewandte und axial seitlich an der Rohraufnahme (2) angreifende zweite Kreisringseitenfläche (17.2) umfasst, **dadurch gekennzeichnet, dass** die zusammengefügte Kreisringscheibe (15) vor Festlegung der zugehörigen Anschlagelemente (9) koaxial zum Rohrabschnitt (Ra) positioniert wird und an ihrer zweiten Kreisringseitenfläche (17.2) zur kraft- und/oder formschlüssigen Anlage axial stirnseitig an der Wärmedämmung (6) positioniert wird und dass die Anschlagelemente (9) axial gegen die erste Kreisringfläche (17.1) geführt und außenseitig an der Rohrleitung (R) festgelegt werden.

15. Montage nach Anspruch 14, wobei die Haltevorrichtung (7) eine Tragkonstruktion (39) zur Abstützung und/oder Aufhängung des Rohrlagers (1) an der Basis (B) aufweist, **dadurch gekennzeichnet, dass** die Tragkonstruktion (39) vor, mit oder nach der Montage des Rohrlagers (1) außenseitig zur kraft- und/oder formschlüssigen Abstützung des Rohrlagers (1) und/oder kraft- und/oder formschlüssigen Aufhängung des Rohrlagers (1) an der Basis (B) gebracht wird.

## Claims

1. A cold-insulated pipe support for a pipeline, in particular for a low-temperature pipeline, comprising a pipe receiving means (2) which delimits a receiving space for a pipe portion of the pipeline and which has an outer shell and an insulating system which is arranged between the outer shell and the receiving space and has a thermal insulation of solid insulating material, and a holding device for receiving and transmitting forces and force moments acting on the pipeline and on a base, wherein the holding device (7) has an abutment device (8) having at least one abutment element (9) for receiving and transmitting axial pipe forces to the pipe receiving means (2) and/or to the base (B), the abutment element (9) is fixed in the installation position on a narrow-area side surface on the outside on the pipeline (R), which side surface extends longitudinally in the axial direction (x) in the installation position and is in the form of a connecting side surface (10) and the at least one abutment element (9) in the installation position engages the pipe receiving means (2) in axially force-operative relationship by way of a provided force application aid (14), **characterised in that** the force application aid (14) bears against the at least one abutment element in a condition of remaining loose.

2. A pipe support according to claim 1 **characterised in that** there is provided at least one respective abutment element (9) at both sides of the pipe receiving means (2) with respect to the axial direction (x).

3. A pipe support according to claim 1 or claim 2 **characterised in that** the abutment element (9) is of a plate-shaped configuration having large side surfaces (12) and narrow side surfaces (13) connecting same, wherein a narrow side surface (13) has the connecting side surface (10) for fixing the abutment element (9) to the pipeline (R).

4. A pipe support according to one of claims 1 to 3 **characterised in that** the force application aid (14) is in the form of a ring element (16) which is arranged at least in partial peripheral relationship in the installation position and having a side surface (12) which in the installation position extends in the cross-sectional plane and which is towards the pipe receiving means (2) and which acts axially on the pipe receiving means (2).

5. A pipe support according to claim 4 **characterised in that** in the installation position the ring element (16) bears against the thermal insulation (6) in a condition of remaining loose at least with respect to the axial direction.

6. A pipe support according to claim 4 or claim 5 **characterised in that** the ring element (16) has an inside radius and the ring element (16) is arranged in coaxially and radially spaced relationship with the pipeline (R) with respect to the inside radius.

7. A pipe support according to one of claims 4 to 6 **characterised in that** the ring element (16) is in the form of a circular ring disc (15).

8. A pipe support according to one of claims 4 to 7 **characterised in that** the ring element (16) is composed of at least two ring sectors (18) which for installation of the pipe support (1) over the pipeline (R) can be moved radially from the outside over the pipeline (R) and can be fixed together at the ends.

9. A pipe support according to one of claims 1 to 8 **characterised in that** the holding device (7) has a carrier structure (39) for supporting and/or suspending the pipe support (1) at the base (B) and the pipe support (1) is mounted to the base (B) in slidingly displaceable and/or rollingly displaceable relationship by means of the carrier structure (39) within a first displacement region (47) in an axial first displacement direction (v1), within a second displacement region (52) in a tangential second displacement direction (v2) perpendicular to the first displacement direction (v1) and/or within a third displacement region (56) in a radial third displacement direction (v3) perpendicular to the first displacement direction (v1) and the second displacement direction (v2).

10. A pipe support according to claim 9 **characterised in that** the carrier structure (39) has a foot element (41) which is fixedly connected to the pipe receiving means (2) and which extends radially from the pipe receiving means (2) and the foot element (41) in the installation position is mounted to the base (B) in slidingly displaceable relationship in the first displacement region (47) and/or the second displacement region (52).

11. A pipe support according to one of claims 1 to 10 **characterised in that** the outer shell (4) and the thermal insulation (6) respectively have at least one division in shape having a division (23) perpendicularly to the cross-sectional plane of the pipe receiving means (2).

12. Installation of a pipe support (1) according to one of claims 1 to 11 over a pipeline (R), wherein the pipe support (1) has a pipe receiving means (2) delimiting a receiving space (3) for a pipe portion (Ra) of the pipeline (R) and having an outer shell (4), an insulating system (5) which is arranged between the outer shell (4) and has a thermal insulation (6) of solid insulating material, and a holding device (7) for receiving and transmitting pipe forces and moments acting on the pipeline (R) and on a base (B), wherein the holding device (7) has an abutment device (8) having at least one abutment element (9) at least for receiving and transmitting axial pipe forces to the pipe receiving means (2) and wherein the outer shell (4) and the thermal insulation (6) each have at least one division in shape with a division (23) perpendicularly to the cross-sectional plane of the pipe receiving means (2), comprising the method steps:
Applying the shaped portions (22) of the pipe receiving means (2), that are formed by the division in shape, radially over the pipeline (R) into an installation position and fixing the shaped portions with their respective division (23) against each other in a relative position relative to each other,
Positioning and fixing at least one respective abutment element (9) at both sides of the pipe receiving means (2) with respect to the axial direction (x) at a narrow-area side surface which extends in the installation position in the axial direction (x) of the pipeline (R) longitudinally and which is in the form of a connecting side surface (10) to the pipeline (R) at the outside so that the abutment element (9) bears indirectly by way of a force application aid (14) in force-locking and/or positively locking relationship in the axial direction (x) against the pipe receiving means (2), wherein the force application aid (14) bears against the abutment element in a condition of remaining loose.

13. Installation according to claim 12 wherein the force application aid (14) is in the form of a circular ring disc (15) divided into at least two ring sectors (18) for radial installation, **characterised in that** the ring sectors (18) are moved radially over the pipeline (R) prior to, with or after installation of the pipe support (1) over the pipe portion (Ra) and are assembled together to provide the circular ring disc (15) and are welded, wherein there is provided a circular ring disc (15) at least on one side of the pipe receiving means (2) with respect to the axial direction (x).

14. Installation according to claim 13 wherein the circular ring disc (15) has an inside radius which is larger than the outside diameter of the pipeline (R) or the pipe portion (Ra), and includes a first circular ring side surface (17.1) that in the installation position is towards the abutment element (9) and a second circular ring side surface (17.2) which is towards the pipe receiving means (2) and which acts axially laterally on the pipe receiving means (2), **characterised in that** the assembled circular ring disc (15) is positioned coaxially relative to the pipe portion (Ra) prior to fixing of the associated abutment elements (9) and is positioned at its second circular ring side surface (17.2) for contact in force-locking and/or positively locking relationship axially at the end at the thermal insulation (6) and the abutment elements (9) are guided axially against the first circular ring surface (17.1) and are fixed to the pipeline (R) at the outside.

15. Installation according to claim 14 wherein the holding device (7) has a carrier structure (39) for supporting and/or suspending the pipe support (1) at the base (B), **characterised in that** the carrier structure (39) is moved prior to, with or after installation of the pipe support (1) on the outside for support in force-locking and/or positively locking relationship of the pipe support (1) and/or suspension in force-locking and/or positively locking relationship of the pipe support (1) on the base (B).

## Revendications

1. Porte-tuyau isolé contre le froid destiné à une conduite, en particulier une conduite basse température, comportant un logement de tuyau (2) délimitant un espace de logement d'une partie de tuyau de la conduite, le logement du tuyau comportant une coquille extérieure et un système isolant avec isolation thermique et un isolant solide entre la coquille extérieure et l'espace de logement, et comportant un dispositif de retenu servant à l'absorption et à la transmission des forces et des couples agissant sur la conduite et sur une base, le dispositif de retenu (7) présente un système de butée (8) comportant au moins un élément de butée (9) servant à l'absorption et à la transmission des forces axiales de tuyau agissant sur le logement de tuyau (2) et/ou sur la base (B), et l'élément de butée (9) est fixé, à l'état monté, à la conduite (R) côté extérieur, sur une face latérale (12) à surface étroite, s'étendant à l'état monté longitudinalement dans la direction axiale (x), et l'au moins un élément de butée (9) agisse, à l'état monté, sous l'effet de force axiale, sur le logement de tuyau (2) par une aide à l'introduction de forces (14) prévue, **caractérisé en ce que** l'aide à l'introduction de forces (14) adhère à l'au moins un élément de butée tout en restant desserrée.

2. Porte-tuyau selon la revendication 1, **caractérisé en ce qu'**au moins un élément de butée (9) est respectivement prévu aux deux côtés du logement de tuyau (2) par rapport à la direction axiale (x).

3. Porte-tuyau selon la revendication 1 ou 2, **caractérisé en ce que** l'élément de butée (9) est configuré sous la forme de plaque avec des faces latérales majeures (12) et avec des faces étroites (13) les reliant l'une à l'autre, une face étroite (13) présentant la face latérale de liaison (10) pour la fixation de l'élément (9) sur la conduite (R).

4. Porte-tuyau selon l'une des revendications 1 à 3, **caractérisé en ce que** l'aide à l'introduction de forces (14) est agencée comme élément annulaire (16) arrangé au moins sur une partie de circonférence, ledit élément présentant une face latérale (12) qui s'étend, à l'état monté, dans le plan de coupe transversale et est tourné vers le logement de tuyau (2) en agissant axialement sur le logement de tuyau (2).

5. Porte-tuyau selon la revendication 4, **caractérisé en ce que** l'élément annulaire (16) adhère, à l'état monté et au moins par rapport à la direction axiale, à l'isolant (6) tout en restant desserré.

6. Porte-tuyau selon la revendication 4 ou 5, **caractérisé en ce que** l'élément annulaire (16) présente un rayon intérieur et que l'élément annulaire est coaxialement et radialement écarté de la conduite (R), par rapport au rayon intérieur.

7. Porte-tuyau selon l'une des revendications 4 à 6, **caractérisé en ce que** l'élément annulaire (16) est configuré sous la forme de disque d'un anneau de cercle (15).

8. Porte-tuyau selon l'une des revendications 4 à 7, **caractérisé en ce que** l'élément annulaire (16) est composé d'au moins deux secteurs annulaires (18) qui, pour monter le porte-tuyau (1), peuvent être placés radialement sur la conduite (R) de l'extérieur et fixés l'un à l'autre sur la face frontale.

9. Porte-tuyau selon l'une des revendications 1 à 8, **caractérisé en ce que** le dispositif de retenu (7) présente une construction porteuse (39) pour supporter et/ou suspendre le porte-tuyau (1) sur la base (B), et **en ce que** le porte-tuyau (1) est logé contre la base (B) de manière glissante et/ou roulante par l'intermédiaire de la construction porteuse (39) dans une première zone de déplacement (47) dans une première direction de déplacement axiale (v1), dans une deuxième zone de déplacement (52) dans une deuxième direction de déplacement tangentielle (v2) perpendiculairement à la première direction de déplacement (v1) et/ou dans une troisième zone de déplacement (56) dans une troisième direction radiale (v3) perpendiculairement à la première direction de déplacement (v1) et à la deuxième direction de déplacement (v2).

10. Porte-tuyau selon la revendication 9, **caractérisé en ce que** la construction porteuse (39) comporte un élément de pied qui est solidaire avec le logement de tuyau (2) et s'étend radialement par rapport au logement de tuyau (2), et **en ce que** l'élément de pied (41) est logé, à l'état monté, sur la base (B) de manière glissante dans la première zone de déplacement (47) et/ou dans la deuxième zone de déplacement (52).

11. Porte-tuyau selon l'une des revendications 1 à 10, **caractérisé en ce que** la coquille extérieure (4) et l'isolant (6) présentent chacun au moins une séparation de moule, avec une séparation (23) perpendiculaire au plan de coupe transversale du logement de tuyau (2).

12. Montage d'un porte-tuyau (1) selon l'une des revendications 1 à 11 sur une conduite (R), le porte-tuyau comportant un logement de tuyau (2) avec une coquille extérieure (4) délimitant un espace de logement (3) d'une partie tuyau (Ra) de la conduite (R), et comportant un système isolant (5) avec un isolation thermique (6) en un isolant solide entre la coquille extérieure (4) et comportant un dispositif de retenu (7) servant à l'absorption et à la transmission des forces et des couples agissant sur la conduite (R) et sur une base (B), le dispositif de retenu (7) présente un système de butée (8) comportant au moins un élément de butée (9) servant à l'absorption et à la transmission des forces axiales du tuyau sur le logement de tuyau (2), et la coquille extérieure (4) et l'isolant (6) présentant chacun une séparation de moule, avec une séparation (23) perpendiculaire au plan en coupe transversale du logement de tuyau (2), ledit montage comprenant les étapes :
- placer les pièces moulées (22) du logement de tuyau (2) produites par la séparation du moule radialement sur la conduite (R) et dans la position d'installation et fixer les pièces moulées avec leur séparation respective (23) contre l'une à l'autre dans une position l'une relatif à l'autre ;
- positionner et fixer à la conduite (R) côté extérieur, sur une face latérale à surface étroite, s'étendant à l'état monté longitudinalement dans la direction axiale (x) et configurée sous la forme d'une surface de liaison (10), au moins un élément de butée (9) aux deux côtés du logement de tuyau (2) par rapport à la direction axiale (x) de sorte que l'élément de butée (9) adhère au logement de tuyau (2) par adhérence ou par l'engagement positif dans la direction axiale (x) par l'intermédiaire de l'aide à introduction de forces (14), l'aide à l'introduction de forces (14) adhérant à l'élément de butée tout en restant desserrée.

13. Montage selon la revendication 12, dans lequel l'aide à l'introduction de forces (14) est sous la forme de disque d'un anneau de cercle (15) qui, pour le montage radial, est séparé en au mous deux secteurs annulaires (18), **caractérisé en ce que** les secteurs annulaires (18) sont placés sur la conduite (R) via la partie tuyau (Ra) avant, pendant ou après le montage du porte-tuyau (1) et sont combinés et soudés l'un à l'autre pour former le disque sous la forme d'un anneau de cercle, un disque sous la forme d'un anneau de cercle (15) étant prévu sur au moins une côté du logement de tuyau (2) par rapport à la direction axiale (x).

14. Montage selon la revendication 13, dans lequel le disque sous la forme d'un anneau de cercle (15) a un rayon intérieur plus grand que le diamètre extérieur de la conduite (R) ou de la partie tuyau (Ra) et comporte une première face latérale d'un anneau de cercle (17.1) qui, à l'état monté, est tournée vers l'élément de butée (9), et une deuxième face latérale d'un anneau de cercle (17.2) qui est tournée vers le logement du tuyau (2) et agisse sur le logement du tuyau (2) axialement et latéralement, **caractérisé en ce que** le disque sous la forme d'un anneau de cercle (15) assemblé est positionné coaxialement à la partie tuyau (Ra), avant la fixation des éléments de butée (9) associés, et **en ce que** le disque sous la forme d'un anneau de cercle est positionné sur sa deuxième face latérale d'un anneau de cercle (17.2) axialement à la face frontale de l'isolant (6) pour l'adhérence à et/ou l'engagement positif axiale avec la face frontale de l'isolant (6), et **en ce que** les élément de butée (9) sont guidés axialement contre la première surface d'un anneau de cercle (17.1) et sont fixés sur la face externe de la conduite (R).

15. Montage selon la revendication 14, dans lequel le dispositif de retenu (7) comporte une construction porteuse (39) pour supporter et/ou suspendre le porte-tuyau (1) sur la base (B), **caractérisé en ce que** la construction porteuse (39) et fixé sur la face extérieure de la base (B) avant, pendant ou après le montage du porte-tuyau (1) pour supporter le porte-tuyau (1) par adhérence et/ou par l'engagement positif et/ou pour suspendre le porte-tuyau (1) par adhérence et/ou par l'engagement positif.
